(19) **Europäisches Patentamt**
**European Patent Office**
**Office européen des brevets**

(11) **EP 4 142 487 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **21720495.7**

(22) Anmeldetag: **23.04.2021**

(51) Internationale Patentklassifikation (IPC):
*A01N 25/02* (2006.01)    *A01N 25/04* (2006.01)
*A01N 63/38* (2020.01)

(52) Gemeinsame Patentklassifikation (CPC):
(C-Sets verfügbar)
**A01N 63/38; A01N 25/02; A01N 25/04**    (Forts.)

(86) Internationale Anmeldenummer:
**PCT/EP2021/060659**

(87) Internationale Veröffentlichungsnummer:
**WO 2021/219505 (04.11.2021 Gazette 2021/44)**

(54) **VERWENDUNG VON POLYETHERN ALS TRÄGER FÜR WIRKSTOFFE**

USE OF POLYETHERS AS CARRIERS FOR ACTIVE AGENTS

UTILISATION DES POLYETHERS EN TANT QUE SUPPORT POUR PRINCIPES ACTIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2020 EP 20172266**

(43) Veröffentlichungstag der Anmeldung:
**08.03.2023 Patentblatt 2023/10**

(73) Patentinhaber: **Evonik Operations GmbH**
**45128 Essen (DE)**

(72) Erfinder:
- **HÄNSEL, René**
  **46282 Dorsten (DE)**
- **SKRABANIA, Katja**
  **45136 Essen (DE)**
- **KLEINEN, Jochen**
  **52525 Heinsberg (DE)**
- **SCHUBERT, Frank**
  **47506 Neukirchen-Vluyn (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
WO-A1-2014/122196    WO-A1-2019/011825
WO-A1-2019/201777    DE-A1- 102012 010 012
GB-A- 1 593 354    US-A- 3 839 571
US-A1- 2007 191 229

- "Polyalkylene Glycol Monobutyl Ether (PGME) Handling/Processing", 7 June 2013 (2013-06-07), U.S.A., pages 1 - 17, XP055728163, Retrieved from the Internet <URL:https://www.ams.usda.gov/sites/default/files/media/PGME%20technical%20evaluation%20report%202013.pdf> [retrieved on 20200907]
- .: "UCON 50-HB-660", 1 January 2020 (2020-01-01), Anaheim, U.S.A., pages 1 - 1, XP055728494, Retrieved from the Internet <URL:https://www.appliedthermalfluids.com/home/shop/ucon-50-hb-660/> [retrieved on 20200908]
- .: "Dowicide G-ST Antimicrobial", 4 October 1976 (1976-10-04), U.S.A., pages 1 - 8, XP055812286, Retrieved from the Internet <URL:https://www3.epa.gov/pesticides/chem_search/ppls/001022-00527-19761004.pdf> [retrieved on 20210609]

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**A01N 25/02, A01N 63/38;**
**A01N 25/04, A01N 63/38**

## Beschreibung

Die vorliegende Erfindung betrifft die Verwendung von Zusammensetzungen, die mindestens einen Polyether umfassen, als Träger für einen Wirkstoff; Verfahren zur Lagerung des Wirkstoffs im Träger; Wirkstoffzusammensetzungen, die sowohl den Träger als auch den Wirkstoff umfassen; die nicht-therapeutische Verwendung dieser Wirkstoffzusammensetzungen für die Behandlung von Pflanzen, für die Behandlung von Saatgut, für die Behandlung von Böden, als probiotisches Nahrungsergänzungsmittel oder probiotisches Futtermitteladditiv; Verfahren zur Behandlung von Pflanzen, Saatgut oder Böden unter Verwendung dieser Wirkstoffzusammensetzungen; diese Wirkstoffzusammensetzungen zur Verwendung als probiotisches Arzneimittel; sowie Pflanzenschutzmittel, Biostimulanzien, probiotische Nahrungsergänzungsmittel, probiotische Futtermitteladditive oder probiotische Arzneimittel, die diese Wirkstoffzusammensetzung enthalten oder daraus bestehen. Erfindungsgemäß ist mindestens ein Wirkstoff ausgewählt aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

In der Landwirtschaft werden Mikroorganismen für eine Vielzahl nützlicher Anwendungen eingesetzt, wie zum Beispiel für den biologischen Pflanzenschutz, zur biologischen Pflanzenstärkung oder zur biologischen Bodenverbesserung. Des Weiteren werden Zusammensetzungen, die lebende Mikroorganismen enthalten, auch für die Behandlung von Saatgut verwendet. Anwendungsgebiet ist also insbesondere die Land- und Forstwirtschaft einschließlich des Garten- und Obstbaus sowie der Kultur von Zierpflanzen und die Anlage und Pflege von Rasenflächen. Zudem kommen Zusammensetzungen, die lebende Mikroorganismen enthalten, auch als Probiotika in Nahrungs- und Futtermitteln oder als probiotische Arzneimittel zur Anwendung.

Biologische Pflanzenschutzmittel - auch als Biopestizide bezeichnet - werden zunehmend in der Landwirtschaft eingesetzt, da sie sie helfen, chemische Pestizide zu ersetzen oder ihren Einsatz zu verringern und so Rückstände chemischer Pestizide auf Lebensmitteln zu reduzieren. Bei Resistenzen von Pflanzenkrankheits- und Schaderregern gegenüber chemischen Pestiziden stellen biologische Pflanzenschutzmittel Alternativen dar. Der Einsatz von biologischen Pflanzenschutzmitteln wird durch die aktuelle Umweltgesetzgebung zunehmend gefördert, da sie sich natürlicher Regulationsmechanismen bedienen, welche sich im Laufe der Evolution entwickelt haben, und damit umweltschonend sind. Biologische Pflanzenschutzmittel finden beispielsweise Verwendung als Fungizide, Insektizide, Nematizide oder Herbizide und werden zur vorbeugenden Behandlung oder kurativen Bekämpfung von Pflanzenkrankheitserregern sowie Schaderregern eingesetzt. Biologische Wirkstoffe sind beispielsweise in The Manual of Biocontrol Agents, 2001, The British Crop Protection Council angegeben.

Als Pflanzenschutzmittel werden gemäß Artikel 2 (1) der VERORDNUNG (EG) Nr. 1107/2009 DES EUROPÄISCHEN PARLAMENTS UND DES RATES vom 21. Oktober 2009 über das Inverkehrbringen von Pflanzenschutzmitteln und zur Aufhebung der Richtlinien 79/117/EWG und 91/414/EWG des Rates Produkte in der dem Verwender gelieferten Form bezeichnet, die aus Wirkstoffen, Safenern oder Synergisten bestehen oder diese enthalten und für einen der nachstehenden Verwendungszwecke bestimmt sind:

a) Pflanzen oder Pflanzenerzeugnisse vor Schadorganismen zu schützen oder deren Einwirkung vorzubeugen, soweit es nicht als Hauptzweck dieser Produkte erachtet wird, eher hygienischen Zwecken als dem Schutz von Pflanzen oder Pflanzenerzeugnissen zu dienen;

b) in einer anderen Weise als Nährstoffe die Lebensvorgänge von Pflanzen zu beeinflussen (z. B. Wachstumsregler);

c) Pflanzenerzeugnisse zu konservieren, soweit diese Stoffe oder Produkte nicht besonderen Gemeinschaftsvorschriften über konservierende Stoffe unterliegen;

d) unerwünschte Pflanzen oder Pflanzenteile zu vernichten, mit Ausnahme von Algen, es sei denn, die Produkte werden auf dem Boden oder im Wasser zum Schutz von Pflanzen ausgebracht;

e) ein unerwünschtes Wachstum von Pflanzen zu hemmen oder einem solchen Wachstum vorzubeugen, mit Ausnahme von Algen, es sei denn, die Produkte werden auf dem Boden oder im Wasser zum Schutz von Pflanzen ausgebracht.

Im Rahmen der vorliegenden Erfindung wird vorzugsweise auf die o.g. Definition für den Begriff "Pflanzenschutzmittel" zurückgegriffen.

Nach der vorläufigen Definition des *European Biostimulants Industry Council* (EBIC) enthalten Biostimulanzien solche Substanzen und/oder Mikroorganismen, deren Funktion bei der Anwendung auf Pflanzen oder in der Rhizosphäre es ist, natürliche Prozesse zu stimulieren, um die Nährstoffaufnahme, Nährstoffeffizienz, Toleranz gegenüber abiotischem Stress und die Qualität der Kulturpflanzen/Ernteprodukte zu verbessern (http://www.biostimulants.eu/). Beispielsweise können die Mikroorganismen *Trichoderma* spp., *Pythium oligandrum, Bacillus* spp., *Pseudomonas* spp. und *Streptomyces* spp. Reaktionen in Pflanzen hervorzurufen, die zu einer erhöhten Widerstandsfähigkeit gegen Krankheitserreger oder andere Stressfaktoren, wie Trockenheit, schlechte Nährstoffversorgung, ungünstige pH-Werte und/oder hohe Salzgehalte im Boden, führen. Die Mikroorganismen *Trichoderma* spp., *Penicillium bilaii, Azotobacter* spp., *Azotomonas* spp., *Azospirillum* spp. und *Rhizobium* spp. können beispielsweise zu einer Verbesserung der Nährstoffverfügbarkeit im Boden oder direkt an der Pflanzenwurzel führen.

Einer breiten Verwendung mikrobiologischer Wirkstoffe für den biologischen Pflanzenschutz, zur biologischen Pflanzenstärkung oder zur biologischen Bodenverbesserung steht bislang ihre im Vergleich zu vielen chemischen Produkten geringere Wirksamkeit entgegen. Diese geringere Wirksamkeit beruht zum Beispiel auf einer unzureichenden Überlebensfähigkeit der Mikroorganismen in der Formulierung während der Lagerung. In der Applikation erreicht möglicherweise zu wenig Wirkstoff den Zielort auf der Pflanze oder im Boden, wo dieser gegebenenfalls durch Umwelteinflüsse rasch abgebaut wird. Diese nachteiligen Aspekte können jedoch durch einen geeigneten Träger verbessert werden.

Das biologische Pflanzenschutzmittel, welches auf Mikroorganismen als aktiven Bestandteil beruht, sowie die Biostimulanzien, werden üblicherweise in Form einer Formulierung vor der Anwendung in Wasser verdünnt. Diese Formulierungen können beispielsweise feste Formulierungen, wie wasserdispergierbare Pulver (WP, wettable powder) oder wasserdispergierbare Granulate (WG, water dispersible granules), sein, aber auch flüssige Formulierungen, wie Öldispersionen (OD, oil dispersions), Suspensionskonzentrate (SC, suspension concentrate) oder Dispersionskonzentrate (DC, dispersion concentrate).

Der Träger bringt die Mikroorganismen in eine handhabbare Form, sodass sie im Wasser verteilt und appliziert werden können. Da viele Mikroorganismen, wie einige Gattungen von Pilzkonidien, wasserabweisend sind, kommt dem Träger insbesondere die Aufgabe zu, diese im Wasser verträglich einzustellen. Außerdem soll die Formulierung auch die Überlebensfähigkeit der Mikroorganismen während Transport und Lagerung gewährleisten. Der Träger soll auch gewährleisten, dass die Anwendung mittels Sprühgeräten erfolgen kann. Die Aggregation der Mikroorganismen soll also vermieden werden, damit ein Verstopfen von Düsen ausgeschlossen werden kann. Der Träger soll dabei vorteilhafterweise auch solche Substanzen enthalten, die die Dispergierung und Verteilung der Mikroorganismen im Wasser gewährleisten, sowie die Aufbringung der Spritzbrühe auf den Pflanzen oder den Boden erleichtern.

In der Praxis werden chemische und biologische Pflanzenschutzmittel vor ihrer Anwendung vom Anwender in Wasser verdünnt. Dazu werden die Pflanzenschutzmittel üblicherweise einem Tank mit Wasser als Inhalt zugegeben und unter Rühren in der sogenannten Spritzbrühe verteilt. Diese Spritzbrühe ist eine anwendungsfertige Verdünnung der Pflanzenschutzmittel. Zur Bestellung von Agrarflächen werden diese Spritzbrühen über den zu behandelnden Pflanzen zerstäubt. Zerstäubung bedeutet in diesem Zusammenhang die Tröpfchenbildung durch mechanische Einwirkung auf ein flüssiges Medium, bevorzugt durch Rotation von Gegenständen und/oder durch Entspannung (Verminderung des Drucks) an kleinen Öffnungen. Besonders bevorzugt wird die Spritzbrühe in Form eines mit Hilfe von Düsen erzeugten Sprays aufgebracht. Für die Bestellung von Agrarflächen werden in der Regel 100 bis 1000 Liter, optimalerweise 100 bis 400 Liter Spritzbrühe pro Hektar versprüht. In Ausnahmefällen wird von diesen Grenzen aber abgewichen.

Die Grenzen können also durchaus nach oben oder unten variieren. Soi werden in sogenannten Low-Volume-Applikationen beispielsweise sehr geringe Mengen von bis zu 1,5 l/ha versprüht, während bei Applikation mit der sogenannten Lanzentechnik sehr hohe Mengen von bis zu 15000 l/ha erreicht werden können. Der Zerstäubungsvorgang kann hierbei entweder aus Höhenlagen, beispielsweise durch das Versprühen von Spritzbrühen aus einem Flugzeug, oder aus erdbodennahen Lagen, beispielsweise durch Versprühen von Spritzbrühen mittels eines an einem Traktor befestigten Spritzgestänges, erfolgen. Andere Geräte, wie Sprühlanzen, oder Rückenspritzen sind ebenfalls bekannt für die Ausbringung von Spritzbrühen. Die Spritzbrühe wird also üblicherweise mittels einer Düse auf die Pflanzen oder den Boden in einer vorgegebenen Dosierung gesprüht. Die Sprühtropfen sollen sich dabei gut auf der Pflanze oder dem Boden verteilen, damit eine optimale Wirkung gewährleistet ist.

Zur Verbesserung der biologischen Wirksamkeit (auch als Effektivität bezeichnet) chemischer Pflanzenschutzmittel ist es gängige Praxis sogenannte "Adjuvantien", auch als "Zusatzstoffe" oder "Adjuvants" bezeichnet, einzusetzen. Adjuvantien werden dabei üblicherweise der wässrigen Spritzbrühe kurz vor dem Ausbringen und Aufsprühen als Tankmischungsadditiv zugesetzt oder direkt in Pflanzenschutzmittelformulierungen integriert. Die Adjuvantien werden üblicherweise in Konzentrationen von 0,001 Vol.-% bis 1 Vol.-% der Spritzbrühe zugesetzt. Die Adjuvantien reduzieren die Oberflächenspannung von Wasser und sorgen für ein verbessertes Anhaften sowie Benetzen der Sprühtropfen an den hydrophoben Blättern der Pflanze und somit für eine großflächige und homogene Verteilung des Pflanzenschutzmittels. Auch verbessern sie das Eindringen und die Verteilung der aktiven Bestandteile der Spritzbrühe in den Boden. Dadurch wird die biologische Wirksamkeit erhöht. Ebenso können Adjuvantien auch die Wirksamkeit biologischer Pflanzenschutzmittel verbessern und in Abhängigkeit von der Art der Formulierung als Dispergiermittel, Emulgator und Netzmittel eingesetzt werden. Jedoch können sie potenziell zytotoxisch für lebende Mikroorganismen sein und werden bisher nur selten für Formulierungen lebender Mikroorganismen eingesetzt. Besonders vorteilhaft ist, wenn das Adjuvant nicht erst bei der Herstellung der Spritzbrühe mit dem biologischen Wirkstoff gemischt wird, sondern sich als Träger für den biologischen Wirkstoff eignet.

Das Pesticides Safety Directorate (PSD, der ausführende Bereich der Health and Safety Executive (HSE), einer nicht-staatlichen, öffentlichen Vereinigung in Großbritannien) definiert ein Adjuvant als eine Substanz, die neben Wasser, nicht selbst als Pestizid wirksam ist, aber die Effektivität eines Pestizides erhöht (https://www.hse.qov.uk/pesticides/ pesticides-reqistration/applicant-quide/the-applicant-quide-adiuvan.htm). Sie bezieht sich dabei auf die VERORDNUNG (EG) Nr. 1107/2009 DES EUROPÄISCHEN PARLAMENTS UND DES RATES vom 21. Oktober 2009 über das Inverkehrbringen von Pflanzenschutzmitteln und zur Aufhebung der Richtlinien 79/117/EWG und 91/414/EWG des Rates, Artikel 2 (3)(d). Danach werden Stoffe oder Zubereitungen, die aus Beistoffen oder Zubereitungen mit einem oder mehreren Beistoffen bestehen, in der dem Verwender gelieferten Form und in Verkehr gebracht, mit der Bestimmung, vom Verwender mit einem Pflanzenschutzmittel vermischt zu werden, um dessen Wirkung oder andere pestizide Eigenschaften zu verstärken, "Zusatzstoffe" genannt. Die Begriffe "Zusatzstoffe", "Adjuvantien" oder Adjuvants werden in der vorliegenden Offenbarung synonym verwendet. Als Adjuvantien werden häufig synthetische Tenside, wie z.B. ethoxylierte Alkohole, Nonylphenolethoxylate Alkylpolyglykoside oder polyethermodifizierte Trisiloxane, eingesetzt.

Die Pflanzenschutzmittel des Standes der Technik weisen üblicherweise mehrere Nachteile auf. Generell ist für alle biologischen Pflanzenschutzmittel gültig, dass die enthaltenen biologischen Wirkstoffe, insbesondere Mikroorganismen oder Sporen von Mikroorganismen, ihre Lebensfähigkeit und/oder Keimfähigkeit mit der Zeit verlieren. Die Pflanzenschutzmittel müssen häufig bei Temperaturen von unter 10 °C gelagert werden, um zumindest für einige Wochen eine akzeptable Lebensfähigkeit und/oder Keimfähigkeit zu gewährleisten. Generell erhöht sich die Überlebensfähigkeit von Mikroorganismen in Formulierungen, je niedriger die Lagertemperatur ist. Aus diesem Grund lagert der Anwender die Formulierungen üblicherweise in einem Kühlschrank oder Gefrierschrank. Die Viskosität von flüssigen Formulierungen ist bei diesen Temperaturen häufig so hoch, dass sich die Pflanzenschutzmittel nicht gut handhaben, insbesondere nicht einfach dosieren lassen. Daher sollten die Formulierungen auch bei tiefen Temperaturen eine möglichst niedrige Viskosität aufweisen, damit sie sich gut verarbeiten, pumpen und mischen lassen. Es ist zudem wünschenswert, dass es nicht zu Ausfällungen kommt (*Pour Point* / Stockpunkt). Auch ist die Emulgierbarkeit/Dispergierbarkeit der flüssigen Pflanzenschutzmittel umso besser, je näher sich die Viskosität des flüssigen Pflanzenschutzmittel der Viskosität des für die Spritzbrühe / den Tank-Mix verwendeten Wassers annähert. Feste Formulierungen, wie WP- und WG-Formulierungen, haben wiederum den Nachteil, dass für den Anwender die Gefahr des Einatmens beim Abmessen und Mischen des konzentrierten Pulvers oder Granulats besteht. Außerdem zeigen feste Formulierungen, die in Wasser dispergiert werden, häufig eine verminderte Benetzung von hydrophoben Oberflächen. Feste Formulierungen haben zudem den Nachteil, dass sie sich schlecht im Wasser verteilen und die Düsen der Sprühvorrichtung verstopfen können. Die festen und flüssigen Formulierungen des Standes der Technik enthalten zudem häufig Additive, die einerseits die Löslichkeit oder die Dispergierbarkeit in Wasser verbessern und somit die Herstellung der Spritzbrühe vereinfachen sollen, aber andererseits die Lebensfähigkeit und/oder Keimfähigkeit von biologischen Wirkstoffen beinträchtigen.

Basieren Pflanzenschutzmittel auf Ölen als flüssige Träger für den Wirkstoff, so müssen sie in der Regel mit Emulgatoren formuliert werden, damit sich die Pflanzenschutzmittel in Wasser emulgieren/dispergieren lassen. Die Verwendung von Emulgatoren erhöht jedoch die Komplexität der Pflanzenschutzformulierungen, weshalb die Verwendung von selbstemulgierenden Ölen anzustreben ist. Ein weiterer Vorteil von selbstemulgierenden Ölen ist, dass der Anwender ein Adjuvant seiner Wahl als Tank-Mix-Additiv einsetzen kann, dessen Wirkung nicht mit dem Emulgator aus der Pflanzenschutzformulierung interferiert, aber dennoch die Vorteile einer Öldispersion bietet. Darüber hinaus sind Emulgatoren und Tenside oftmals toxisch für Mikroorganismen, weshalb der Einsatz von selbstemulgierenden Ölen zu bevorzugen sind. Außerdem neigen Tenside und Emulgatoren dazu, Überstrukturen zu bilden, die einen negativen Einfluss auf die Viskosität haben können. Darüber hinaus neigen Formulierungen, die Tenside oder Emulgatoren enthalten dazu zu schäumen, wenn diese in Wasser gemischt oder gepumpt werden. Auf den Einsatz von Entschäumern bei der Verwendung von selbstemulgierenden Öldispersionen kann folglich verzichtet werden, was ökonomische Vorteile als auch Vorteile für den Formulierer bietet, da auf Grund der geringen Anzahl an Komponenten, auch weniger Probleme hinsichtlich der Kompatibilität der einzelnen Bestandteile der Pflanzenschutzformulierung resultieren. Öldispersionen müssen darüber hinaus nicht konserviert werden und für den Formulierer bieten sie den Vorteil, dass, anders als in Emulsionen, wenig bis kein Aufwand getrieben werden muss, um Parameter wie Tröpfchengröße und Stabilisierung zu optimieren. Außerdem tritt in Öldispersion keine oder nur eine sehr geringe Hydrolyse auf, da die Formulierung in der Regel wenig oder kein Wasser enthält. Die Rheologie von Öldispersionen kann, bei Bedarf, in der Regel durch Additive, wie z.B. Silica-Partikel, eingestellt werden. Außerdem enthalten Öldispersionen keine Lösemittel, was die Brandgefahr sowie die Belastung der Anwender und der Natur durch flüchtige Komponenten / Lösemittel minimiert.

WO 2017/210512 A1 offenbart einen nicht-wässrigen, nicht-öligen flüssigen Träger für lebende Mikroorganismen. Der Träger ist vorzugsweise ausgewählt aus der Gruppe bestehend aus Polyethylenglykol, Glyzerin, Ethylenglykol, Dipropylenglykol, Proplyencarbonat und ihren Mischungen. Als besonders bevorzugt wird eine Mischung aus Polyethylenglykol und Glyzerin beschrieben. Es zeigt sich, dass die Lagerstabilität von biologischen Pflanzenschutzmitteln bei Verwendung von Polyethylenglykol oder Glyzerin gering ist. Zudem ist die Viskosität von Polyethylenglykol als auch von Glyzerin bei niedrigen Temperaturen, wie sie für die Lagerung von biologischen Pflanzenschutzmitteln üblich sind, vergleichsweise hoch, was die Dosierung und Handhabung der Pflanzenschutzmittel erschwert. Einige Polyethylenglykole sind zudem fest.

Paul et al. (International Journal of Biological Chemistry (2015), 9(2), 79-85; DOI: 10.3923/jibc.2015.79.85; "Long Term Preservation of Commercial Important Fungi in Glycerol at 4°C" untersuchten die Überlebensrate verschiedener Mikroorgansimen, unter anderem für *Trichoderma-Spezies* in Glyzerin/Wasser-Mischungen und fanden, dass die Überlebensrate der Organismen in reinem Glyzerin bei 4°C optimal ist. Wie bereits oben beschrieben, ist die Lagerstabilität von biologischen Pflanzenschutzmitteln bei Verwendung von Glyzerin aber dennoch gering und die Viskosität von Glyzerin bei niedrigen Temperaturen, wie sie für die Lagerung von biologischen Pflanzenschutzmitteln üblich sind, vergleichsweise hoch, was die Dosierung und Handhabung der Pflanzenschutzmittel erschwert.

WO 2017/116837 A1 offenbart Zusammensetzungen umfassend mikrobielle Sporen, ein oder mehrere Dispergiermittel, ein oder mehrere Schutzmittel und einen nichtwässrigen flüssigen Träger. Es werden insbesondere Polyethylenglykole oder Polypropylenglykole als Träger offenbart. Die Lagerstabilität von biologischen Pflanzenschutzmitteln bei Verwendung von Polyethylenglykolen bzw. Polypropylenglykolen ist gering, Polyethylenglykole sind zudem entweder fest oder aber die Viskosität ist bei niedrigen Temperaturen erhöht, was die Dosierung und Handhabung erschwert.

Es besteht daher weiterhin der Bedarf, Träger für Wirkstoffe bereitzustellen, welche deutliche Vorteile gegenüber dem Stand der Technik aufweisen.

Die Aufgabe der vorliegenden Erfindung war es daher, neue Träger für Wirkstoffe bereitzustellen, welche zumindest einen Nachteil des Standes der Technik überwinden.

Es bestand insbesondere die Aufgabe, Träger für Wirkstoffe bereitzustellen, die zu einer verbesserten Lagerstabilität des Wirkstoffs bzw. Pflanzenschutzmittels führen, die zudem auch bei niedriger Temperatur eine niedrige Viskosität und somit eine bessere Dosierbarkeit und Handhabung des Pflanzenschutzmittels erlauben, und zudem selbstemulgierbar oder wasserlöslich und somit gut mit Wasser verdünnbar sind.

Erfindungsgemäß ist dabei mindestens ein Wirkstoff ausgewählt aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

Überraschenderweise wurde gefunden, dass die Verwendung von Verbindungen der Formel (I) als Träger für Pflanzenschutzwirkstoffe diese Aufgabe löst.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Ein erster Gegenstand der vorliegenden Erfindung ist deshalb die Verwendung einer Zusammensetzung, umfassend mindestens eine Verbindung der Formel (I),

$$R^1O\text{-}[(C_2H_3R^2)\text{-}O]_n\text{-}H \qquad \text{Formel (I),}$$

wobei

$R^1$    ein einbindiger aliphatischer Rest mit 1 bis 22, vorzugsweise 2 bis 10, insbesondere 3 bis 4 Kohlenstoffatomen ist;

$R^2$    jeweils unabhängig voneinander ein Wasserstoffradikal oder ein Methylrest ist,

$n$    eine Zahl von 1 bis 300, vorzugsweise von 5 bis 100, insbesondere von 10 bis 30 ist,

mit der Maßgabe, dass mindestens ein Rest $R^2$ ein Methylrest ist,

als Träger für mindestens einen Wirkstoff, wobei mindestens ein Wirkstoff ausgewählt ist aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

Weitere Gegenstände der Erfindung sind in den Ansprüchen 12, 13, 15, 16, 17 und 18 definiert.

Die erfindungsgemäße Verwendung einer Verbindung der Formel (I) als Träger für einen Wirkstoff führt zu einer verbesserten Lagerstabilität des Wirkstoffs bzw. der Wirkstoffzusammensetzung. Die Verbindung der Formel (I) zeigt zudem auch bei niedriger Temperatur eine ausreichend niedrige Viskosität. Dies führt zu einer besseren Dosierbarkeit und einfacheren Handhabung der Wirkstoffzusammensetzung bzw. des Pflanzenschutzmittels. Die Verbindung der Formel (I) ist zudem selbstemulgierbar oder wasserlöslich und somit gut mit Wasser verdünnbar. Der Einsatz von weiteren Additiven, die die Löslichkeit oder Dispergierbarkeit des Wirkstoffs bzw. Wirkstoffzusammensetzung in der Spritzbrühe verbessern, ist daher nicht nötig. Entsprechend zeigt auch die erfindungsgemäße Wirkstoffzusammensetzung eine verbesserte Lagerstabilität, sie ist besser dosierbar, einfacher handhabbar und zudem in Wasser gut löslich bzw. gut dispergierbar.

Die Erfindung wird nachfolgend beispielhaft beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Jede Ausführungsform, die durch Kombination von Bereichen/Teilbereichen und/oder Gruppen/Teilgruppen erhalten werden kann, wie beispielsweise durch Kombinationen von erfindungsgemäßen, wesentlichen, optionalen, bevorzugten, vorzugsweisen bzw. vorzugsweise ausgewählten, weiter bevorzugten, noch weiter bevorzugten, besonders bevorzugten oder insbesondere bevorzugten Bereichen/Teilbereichen und/oder Gruppen/Teilgruppen, gehört vollständig zum Offenbarungsgehalt der vorliegenden Erfindung und gilt als explizit, unmittelbar und eindeutig offenbart. Werden im Rahmen der vorliegenden Beschreibung Dokumente zitiert, so soll deren Inhalt vollständig zum Offenbarungsgehalt der vorliegenden Erfindung gehören. Werden nachfolgend Mittelwerte angegeben, so handelt es sich, wenn nicht anders angegeben, um Zahlenmittel. Werden nachfolgend Messwerte oder Stoffeigenschaften angegeben, so handelt es sich, wenn nicht anders angegeben, um Messwerte oder Stoffeigenschaften gemessen bei 25 °C sowie vorzugsweise bei einem Druck von 101325 Pa (Normaldruck). Wo immer Moleküle bzw. Molekülfragmente ein oder mehrere Stereozentren aufweisen oder aufgrund von Symmetrien in Isomere unterschieden werden können oder aufgrund anderer Effekte, wie beispielsweise eingeschränkter Rotation, in Isomere unterschieden werden können, sind alle möglichen Isomere von der vorliegenden Erfindung miteingeschlossen. Spezielle Ausführungen sind im Folgenden definiert, so dass Merkmale wie Indizes oder Strukturbestandteile durch die Ausführung Beschränkungen erfahren können. Für alle Merkmale, die nicht von der Beschränkung betroffen sind, bleiben die übrigen Definitionen jeweils gültig. Die Einheiten [$(C_2H_3R^2)$-O] in Formel (I) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen; sie können auch alternierend aufgebaut sein oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. Die Formel (I) beschreibt Verbindungen, die aus Wiederholungseinheiten aufgebaut sein können, wie beispielsweise sich wiederholende Fragmente, Blöcke oder Monomereinheiten, und eine Molgewichtsverteilung aufweisen können. Die Häufigkeit der Wiederholungseinheiten wird durch den Index n angegeben. Der Index n ist das numerische Mittel über alle Wiederholungseinheiten und ist als statistischer Mittelwert (Zahlenmittel) zu betrachten. Der Index n sowie der Wertebereich des angegebenen Index ist also als Mittelwert der möglichen statistischen Verteilung der tatsächlichen vorhandenen Strukturen und/oder deren Mischungen zu verstehen. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht. Werden im Rahmen der vorliegenden Beschreibung Dokumente zitiert, so soll deren Inhalt vollständig zum Offenbarungsgehalt der vorliegenden Erfindung gehören.

Erfindungsgemäß wird eine Zusammensetzung, umfassend mindestens eine Verbindung der Formel (I),

$$R^1O\text{-}[(C_2H_3R^2)\text{-}O]_n\text{-}H \qquad \text{Formel (I),}$$

wobei

$R^1$ ein einbindiger aliphatischer Rest mit 1 bis 22, vorzugsweise 2 bis 10, insbesondere 3 bis 4 Kohlenstoffatomen ist,

$R^2$ jeweils unabhängig voneinander ein Wasserstoffradikal oder ein Methylrest ist,

n eine Zahl von 1 bis 300, vorzugsweise von 5 bis 100, insbesondere von 10 bis 30 ist,

mit der Maßgabe, dass mindestens ein Rest $R^2$ ein Methylrest ist,
als Träger für mindestens einen Wirkstoff verwendet, wobei mindestens ein Wirkstoff ausgewählt ist aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

Die als Träger zu verwendende Zusammensetzung umfassend mindestens eine Verbindung der Formel (I) wird im Rahmen dieser Offenbarung auch einfach als Träger oder Trägerzusammensetzung bezeichnet. Eine Zusammensetzung umfassend den Träger und den Wirkstoff wird im Rahmen dieser Offenbarung auch als Wirkstoffzusammensetzung bezeichnet.

Die Trägerzusammensetzung ist vorzugsweise flüssig. Sie ermöglicht das Lösen oder Dispergieren des Wirkstoffs, insbesondere von Pilzen und Pilzsporen. Der Wirkstoff liegt also im Träger gelöst oder dispergiert vor. Der Träger unterstützt zudem das Lösen oder Dispergieren des Wirkstoffs in einer wässrigen Zusammensetzung, wie beispielsweise der Spritzbrühe.

Die Verbindung der Formel (I) weist terminal einen einbindigen aliphatischen Rest $R^1$ mit 1 bis 22, vorzugsweise 2 bis 10, insbesondere 3 bis 4 Kohlenstoffatomen auf. Dies führt im Vergleich zu Polyethern, die ausschließlich OH-terminiert sind, zu einer deutlich verbesserten Lagerstabilität. $R^1$ kann beispielsweise linear oder verzweigt, cyclisch oder nicht-cyclisch, gesättigt oder ungesättigt sein. Es ist bevorzugt, dass der Rest $R^1$ ein Alkylrest, vorzugsweise ein Rest ausgewählt aus der Gruppe bestehend aus Methyl, Ethyl, *n*-Propyl, *iso*-Propyl, *n*-Butyl, *iso*-Butyl, *sec*-Butyl, *tert*-Butyl, *n*-Pentyl (Amyl), 2-Pentyl (*sec*-Pentyl), 3-Pentyl; 2-Methylbutyl, 3-Methylbutyl (*iso*-Pentyl oder *iso*-Amyl), 3-Methylbut-2-yl, 2-Methylbut-2-yl, 2,2-Dimethylpropyl (Neopentyl), Hexyl, Octyl, Decyl, Dodecyl, Myristyl, Stearyl, 2-Ethylhexyl, 2-Propylheptyl, 3,5,5-Trimethylhexyl, Isononyl, Isotridecyl, insbesondere ein n-Butylrest ist.

Die Verbindung der Formel (I) weist eine oder mehrere zweibindige Gruppen $-[(C_2H_3R^2)-O]-$ auf, wobei der Rest $R^2$ jeweils unabhängig voneinander ein Wasserstoffradikal oder ein Methylrest ist. Bei den zweibindigen Gruppen $-[(C_2H_3R^2)-O]-$ handelt es sich also um Alkylenoxygruppen. Ist $R^2$ ein Wasserstoffradikal, also für den Fall, dass gilt: $R^2 = H$, handelt es sich bei der Gruppe $-[(C_2H_3R^2)-O]-$ um eine Gruppe $-[(C_2H_4)-O]-$, also um eine Gruppe $-(CH_2-CH_2-O)-$, also um eine Ethylenoxygruppe. Ist dagegen $R^2$ eine Methylrest, also für den Fall, dass gilt: $R^2 = CH_3$, handelt es sich bei der Gruppe $-[(C_2H_3R^2)-O]-$ um eine Gruppe $-[(C_2H_3(CH_3))-O]-$, also um eine Propylenoxygruppe. Die Propylenoxygruppe kann jeweils unabhängig voneinander in den räumlichen Orientierungen $-(CH_2-CH(CH_3)-O)-$ oder $-(CH(CH_3)-CH_2-O)-$, vorzugsweise aber in der räumlichen Orientierung $-(CH_2-CH(CH_3)-O)-$, in der Verbindung der Formel (I) vorliegen, wobei die für die Verbindung der Formel (I) die in Formel (I) gewählte räumlichen Orientierung zu Grunde zu legen ist, also eine räumliche Orientierung bei der die $R^1O$-Gruppe am linken Ende und die OH-Gruppe am rechten Ende der Verbindung der Formel (I) gebunden vorliegt.

Der Index n ist eine Zahl von 1 bis 300, vorzugsweise von 5 bis 100, insbesondere von 10 bis 30 ist. Der Index n ist also beispielsweise eine Zahl von 1 bis 300, von 2 bis 250, von 3 bis 200, von 4 bis 150, von 5 bis 100, von 6 bis 81, von 7 bis 50, von 8 bis 40 und/oder von 10 bis 30, wobei ein engerer Zahlenbereich gegenüber einem breiteren Zahlenbereich jeweils bevorzugt ist. Bei n > 300 ist die Viskosität der Verbindung der Formel (I) stark erhöht und daher als Träger weniger geeignet, da durch die erhöhte Viskosität die Dosierbarkeit und Handhabbarkeit der Wirkstoffzusammensetzung verschlechtert wird.

Es ist bevorzugt, dass für die Verbindung der Formel (I) gilt, dass 10 % bis 100 %, vorzugsweise 20 % bis 80 %, insbesondere 40 % bis 60 % der Reste $R^2$ Methylreste sind, wobei der Maximalwert 100% beträgt. Der Mengenanteil der Propylenoxygruppen bezogen auf die Gesamtmenge der Alkylenoxygruppen, also der Gesamtmenge der Propylenoxygruppen und Ethylenoxygruppen zusammengenommen, beträgt also von 10 % bis 100 %, vorzugsweise von 20 % bis 80 %, insbesondere von 40 % bis 60 %, wobei der Maximalwert 100 % beträgt. Die Anzahl der Propylenoxygruppen dividiert durch die Gesamtzahl der Alkylenoxygruppen, also der Gesamtzahl der Propylenoxygruppen und Ethylenoxygruppen zusammengenommen, beträgt also von 10 % bis 100 %, vorzugsweise von 20 % bis 80 %, insbesondere von 40 % bis 60 %, wobei der Maximalwert 100 % beträgt.

Es hat sich nämlich gezeigt, dass Polyether, die nur Ethylenoxy-Einheiten und keine Propylenoxy-Einheiten enthalten, insbesondere bei niedrigen Temperaturen eine hohe Viskosität zeigen oder sind fest sind, wohingegen Polyether, die nur Propylenoxy-Einheiten und keine Ethylenoxy-Einheiten aufweisen oder aber sowohl Ethylenoxy-Einheiten als auch Propylenoxy-Einheiten enthalten, durchwegs eine niedrige Viskosität zeigen.

Als besonders vorteilhaft haben sich die folgenden Ausführungsformen erwiesen:

In einer bevorzugten Ausführungsform der Erfindung wird eine Verbindung der Formel (I),

$$R^1O-[(C_2H_3R^2)-O]_n-H \qquad \text{Formel (I),}$$

wobei

R$^1$    ein einbindiger aliphatischer Rest mit 2 bis 10 Kohlenstoffatomen ist, insbesondere ein Alkylrest mit 2 bis 10 Kohlenstoffatomen;

R$^2$    jeweils unabhängig voneinander ein Wasserstoffradikal oder ein Methylrest ist;

n    eine Zahl von 2 bis 250 ist;

mit der Maßgabe, dass 20 % bis 80 % der Reste $R^2$ Methylreste sind,

verwendet.

In einer weiter bevorzugten Ausführungsform der Erfindung wird eine Verbindung der Formel (I),

$$R^1O-[(C_2H_3R^2)-O]_n-H \qquad \text{Formel (I),}$$

wobei

R$^1$    ein einbindiger aliphatischer Rest mit 2 bis 10 Kohlenstoffatomen ist, insbesondere ein Alkylrest mit 2 bis 10 Kohlenstoffatomen;

$R^2$ jeweils unabhängig voneinander ein Wasserstoffradikal oder ein Methylrest ist;

n eine Zahl von 5 bis 100 ist;

mit der Maßgabe, dass 20 % bis 80 % der Reste $R^2$ Methylreste sind, verwendet.

In einer noch weiter bevorzugten Ausführungsform der Erfindung wird eine Verbindung der Formel (I),

$$R^1O-[(C_2H_3R^2)-O]_n-H \qquad \text{Formel (I),}$$

wobei

$R^1$ ein einbindiger aliphatischer Rest mit 3 bis 4 Kohlenstoffatomen, insbesondere ein Alkylrest mit 3 bis 4 Kohlenstoffatomen;

$R^2$ jeweils unabhängig voneinander ein Wasserstoffradikal oder ein Methylrest ist;

n eine Zahl von 6 bis 81 ist;

mit der Maßgabe, dass 20 % bis 80 % der Reste $R^2$ Methylreste sind, verwendet.

In einer noch weiter bevorzugten Ausführungsform der Erfindung wird eine Verbindung der Formel (I),

$$R^1O-[(C_2H_3R^2)-O]_n-H \qquad \text{Formel (I),}$$

wobei

$R^1$ ein einbindiger aliphatischer Rest mit 3 bis 4 Kohlenstoffatomen, insbesondere ein Alkylrest mit 3 bis 4 Kohlenstoffatomen;

$R^2$ jeweils unabhängig voneinander ein Wasserstoffradikal oder ein Methylrest ist;

n eine Zahl von 8 bis 40 ist;

mit der Maßgabe, dass 20 % bis 80 % der Reste $R^2$ Methylreste sind, verwendet.

In einer noch weiter bevorzugten Ausführungsform der Erfindung wird eine Verbindung der Formel (I),

$$R^1O-[(C_2H_3R^2)-O]_n-H \qquad \text{Formel (I),}$$

wobei

$R^1$ ein einbindiger aliphatischer Rest mit 3 bis 4 Kohlenstoffatomen, insbesondere ein Alkylrest mit 3 bis 4 Kohlenstoffatomen;

$R^2$ jeweils unabhängig voneinander ein Wasserstoffradikal oder ein Methylrest ist;

n eine Zahl von 10 bis 30 ist;

mit der Maßgabe, dass 20 % bis 80 % der Reste $R^2$ Methylreste sind, verwendet.

In einer ebenfalls bevorzugten Ausführungsform der Erfindung wird eine Verbindung der Formel (I),

$$R^1O-[(C_2H_3R^2)-O]_n-H \qquad \text{Formel (I),}$$

wobei

$R^1$ ein n-Butyl ist;

$R^2$ jeweils unabhängig voneinander ein Wasserstoffradikal oder ein Methylrest ist;

n eine Zahl von 2 bis 250 ist;

mit der Maßgabe, dass 20 % bis 80 % der Reste $R^2$ Methylreste sind, verwendet.

In einer weiter bevorzugten Ausführungsform der Erfindung wird eine Verbindung der Formel (I),

$R^1O\text{-}[(C_2H_3R^2)\text{-}O]_n\text{-}H$ Formel (I),

wobei

R$^1$    ein n-Butyl ist;
R$^2$    jeweils unabhängig voneinander ein Wasserstoffradikal oder ein Methylrest ist;
n    eine Zahl von 5 bis 100 ist;

mit der Maßgabe, dass 20 % bis 80 % der Reste R$^2$ Methylreste sind, verwendet.

In einer noch weiter bevorzugten Ausführungsform der Erfindung wird eine Verbindung der Formel (I),

$R^1O\text{-}[(C_2H_3R^2)\text{-}O]_n\text{-}H$ Formel (I),

wobei

R$^1$    ein n-Butyl ist;
R$^2$    jeweils unabhängig voneinander ein Wasserstoffradikal oder ein Methylrest ist;
n    eine Zahl von 6 bis 81 ist;

mit der Maßgabe, dass 20 % bis 80 % der Reste R$^2$ Methylreste sind, verwendet.

In einer noch weiter bevorzugten Ausführungsform der Erfindung wird eine Verbindung der Formel (I),

$R^1O\text{-}[(C_2H_3R^2)\text{-}O]_n\text{-}H$ Formel (I),

wobei

R$^1$    ein n-Butyl ist;
R$^2$    jeweils unabhängig voneinander ein Wasserstoffradikal oder ein Methylrest ist;
n    eine Zahl von 8 bis 40 ist;

mit der Maßgabe, dass 20 % bis 80 % der Reste R$^2$ Methylreste sind, verwendet.

In einer noch weiter bevorzugten Ausführungsform der Erfindung wird eine Verbindung der Formel (I),

$R^1O\text{-}[(C_2H_3R^2)\text{-}O]_n\text{-}H$ Formel (I),

wobei

R$^1$    ein n-Butyl ist;
R$^2$    jeweils unabhängig voneinander ein Wasserstoffradikal oder ein Methylrest ist;
n    eine Zahl von 10 bis 30 ist;

mit der Maßgabe, dass 20 % bis 80 % der Reste R$^2$ Methylreste sind, verwendet.

In einer ebenfalls bevorzugten Ausführungsform der Erfindung wird eine Verbindung der Formel (I),

$R^1O\text{-}[(C_2H_3R^2)\text{-}O]_n\text{-}H$ Formel (I),

wobei

R$^1$    ein n-Butyl ist;
R$^2$    jeweils unabhängig voneinander ein Wasserstoffradikal oder ein Methylrest ist;
n    eine Zahl von 2 bis 250 ist;

mit der Maßgabe, dass 40 % bis 60 % der Reste R$^2$ Methylreste sind, verwendet.

In einer weiter bevorzugten Ausführungsform der Erfindung wird eine Verbindung der Formel (I),

$$R^1O\text{-}[(C_2H_3R^2)\text{-}O]_n\text{-}H \qquad \text{Formel (I),}$$

wobei

R$^1$     ein n-Butyl ist;
R$^2$     jeweils unabhängig voneinander ein Wasserstoffradikal oder ein Methylrest ist;
n      eine Zahl von 5 bis 100 ist;

mit der Maßgabe, dass 40 % bis 60 % der Reste R$^2$ Methylreste sind,
verwendet.

In einer noch weiter bevorzugten Ausführungsform der Erfindung wird eine Verbindung der Formel (I),

$$R^1O\text{-}[(C_2H_3R^2)\text{-}O]_n\text{-}H \qquad \text{Formel (I),}$$

wobei

R$^1$     ein n-Butyl ist;
R$^2$     jeweils unabhängig voneinander ein Wasserstoffradikal oder ein Methylrest ist;
n      eine Zahl von 6 bis 81 ist;

mit der Maßgabe, dass 40 % bis 60 % der Reste R$^2$ Methylreste sind,
verwendet.

In einer noch weiter bevorzugten Ausführungsform der Erfindung wird eine Verbindung der Formel (I),

$$R^1O\text{-}[(C_2H_3R^2)\text{-}O]_n\text{-}H \qquad \text{Formel (I),}$$

wobei

R$^1$     ein n-Butyl ist;
R$^2$     jeweils unabhängig voneinander ein Wasserstoffradikal oder ein Methylrest ist;
n      eine Zahl von 8 bis 40 ist;

mit der Maßgabe, dass 40 % bis 60 % der Reste R$^2$ Methylreste sind,
verwendet.

In einer noch weiter bevorzugten Ausführungsform der Erfindung wird eine Verbindung der Formel (I),

$$R^1O\text{-}[(C_2H_3R^2)\text{-}O]_n\text{-}H \qquad \text{Formel (I),}$$

wobei

R$^1$     ein n-Butyl ist;
R$^2$     jeweils unabhängig voneinander ein Wasserstoffradikal oder ein Methylrest ist;
n      eine Zahl von 10 bis 30 ist;

mit der Maßgabe, dass 40 % bis 60 % der Reste R$^2$ Methylreste sind,
verwendet.

Trägerzusammensetzungen, die Verbindungen der Formel (I) gemäß mindestens einer dieser drei Ausführungsformen enthalten oder (im Wesentlichen) aus ihnen bestehen, zeichnen sich durch ein besonders gutes Eigenschaftsprofil aus. Sie führen zu einer verbesserten Lagerstabilität des Wirkstoffs, weisen auch bei niedriger Temperatur eine niedrige Viskosität auf und ermöglichen somit eine bessere Dosierbarkeit und Handhabung der Wirkstoffzusammensetzung, und zudem selbstemulgierbar oder wasserlöslich und somit gut mit Wasser verdünnbar sind.

Es ist weiterhin bevorzugt, dass die zahlenmittlere molare Masse der mindestens einen Verbindung der Formel (I) mindestens 300 g/mol, noch bevorzugter mindestens 400 g/mol, vorzugsweise mindestens 800 g/mol, insbesondere mindestens 1200 g/mol beträgt, wobei die zahlenmittlere molare Masse vorzugsweise wie in den Beispielen beschrieben bestimmt wird. Es ist weiterhin bevorzugt, dass die zahlenmittlere molare Masse der mindestens einen Verbindung der Formel (I) von 300 g/mol bis 4500 g/mol, noch bevorzugter von 400 g/mol bis 3000 g/mol, vorzugsweise von 800 g/mol bis 2000 g/mol, insbesondere von 1200 g/mol bis 1500 g/mol beträgt, wobei die zahlenmittlere molare Masse vorzugsweise wie in den Beispielen beschrieben bestimmt wird. Eine zahlenmittlere molare Masse in den oben angegeben Bereichen führt zu einer optimalen Viskosität bei tiefen Temperaturen (z.B. 0 °C), bei denen insbesondere biologische Pflanzenschutzmittel häufig gelagert werden, als auch bei Raumtemperatur (z.B. 25 °C), bei den insbesondere chemische Pflanzenschutzmittel gelagert werden. Ist die Viskosität zu hoch, so lässt sich die Wirkstoffzusammensetzung schwer dosieren und handhaben, ist die Viskosität zu niedrig, so kann es zu einer unerwünschten Separation von Dispersionsphase und dispergierter Phase kommen, beispielsweise zum Absetzen/Absinken des Wirkstoffs.

Die Polarität, das Molekulargewicht und die Hydrophobie/Hydrophilie von Verbindungen der Formel (I) lässt sich so einstellen, dass sie in Wasser selbstemulgierend oder wasserlöslich und somit gut mit Wasser verdünnbar sind. Es ist bevorzugt, dass der HLB-Wert der mindestens einen Verbindung der Formel (I) von 0,0 bis 14,0, vorzugsweise von 3,0 bis 10,0, insbesondere von 7,0 bis 9,5 beträgt. "HLB" steht für englisch *hydrophilic lipophilic balance*. Der HLB-Wert kann nach verschieden Methoden des Standes der Technik bestimmt werden und ist ein anerkanntes Maß für die Hydrophobie/Hydrophilie. Bevorzugt wird der HLB-Wert nach der Methode von Griffin bestimmt (W. C. Griffin: Classification of surface active agents by HLB, J. Soc. Cosmet. Chem. 1, 1949, S. 311-326). Dabei wird der HLB-Wert gemäß der Formel

$$HLB = 20 \cdot \left(1 - \frac{m_l}{m}\right)$$

berechnet, wobei $m_l$ die Molmasse des lipophilen Anteils eines Moleküls und $m$ die Molmasse des gesamten Moleküls ist. Die Molmasse $m_h$ des hydrophilen Anteils eines Moleküls ergibt sich entsprechend nach $m_h = m - m_l$. Die Molmassen werden nach den Methoden des Standes der Technik bestimmt, bevorzugt werden sie massenspektrometrisch bestimmt, die Bestimmung des lipophilen Anteils bzw. des hydrophilien Anteils erfolgt ebenfalls bevorzugt aus den massenspektroskopischen Ergebnissen unter Anwendung der dem Fachmann bekannten stöchiometrischen Regeln. Die Molmassen können auch anhand der Molekülstruktur berechnet werden. Im Falle von Verbindungen der Formel (I) berechnet sich Masse des hydrophilen Anteils aus der Gesamtmasse aller Gruppen -[(C$_2$H$_3$R$^2$)-O]- mit R$^2$ = H, also aus der Gesamtmasse aller enthaltenen Ethylenoxy-Gruppen (Oxyethylen-Gruppen).

Es wurde außerdem überraschenderweise festgestellt, dass sich die Viskosität und die Verdünnbarkeit (Selbstemulgierbarkeit bzw. Wasserlöslichkeit) des Trägers durch Mischen unterschiedlicher Polyether gezielt einstellen lässt.

Es ist daher bevorzugt, dass mindestens eine Verbindung (A) und mindestens eine davon unterschiedliche Verbindung (B) eingesetzt werden, wobei sowohl die mindestens eine Verbindung (A) als auch die mindestens eine Verbindung (B) Verbindungen der Formel (I) sind und wobei der HLB-Wert der mindestens einen Verbindung (A) von 0,0 bis 10,0, vorzugsweise von 0,0 bis 3,0, insbesondere von 0,0 bis 3,0 beträgt und der HLB-Wert der mindestens einen Verbindung (B) von 2,0 bis 15,0, vorzugsweise von 4,0 bis 14,0, insbesondere von 8,0 bis 13,0 beträgt.

Die Kombination einer Verbindung (A) mit HLB = 0, die nur Oxypropylen-Einheiten und keine Oxyethylen-Einheiten aufweist, und einer Verbindung (B) mit HLB > 0, die sowohl Oxyethylen-Einheiten als auch Oxypropylen-Einheiten aufweist, zeigt besonders vorteilhafte Eigenschaften als Träger.

Es ist bevorzugt, dass der Träger überwiegend die mindestens eine Verbindung der Formel (I) enthält. Es ist daher bevorzugt, dass der Massenanteil der mindestens einen Verbindung der Formel (I) mindestens 90 %, bevorzugt mindestens 95 %, insbesondere mindestens 99 % bezogen auf die Gesamtmasse des Trägers beträgt, wobei der Maximalwert 100 % beträgt. Es ist also bevorzugt, dass der Massenanteil aller Verbindungen der Formel (I) mindestens 90 %, bevorzugt mindestens 95 %, insbesondere mindestens 99 % bezogen auf die Gesamtmasse des Trägers beträgt, wobei der Maximalwert 100 % beträgt.

Es ist besonders vorteilhaft, wenn die als Träger verwendete Zusammensetzung aus der mindestens einen Verbindung der Formel (I) (im Wesentlichen) besteht, wenn also der Massenanteil der mindestens einen Verbindung der Formel (I) 100 % beträgt, also dem Maximalwert entspricht. Es ist also bevorzugt, dass der Massenanteil aller Verbindungen der Formel (I) 100 % beträgt, also dem Maximalwert entspricht.

Verfahren zur Herstellung von Verbindungen der Formel (I) sind dem Fachmann bekannt. Die Verbindungen der Formel (I) werden vorzugsweise durch Umsetzung von hydroxyfunktionellen Verbindungen der Formel R$^1$-OH, wobei R$^1$ wie in Formel (I) definiert ist, mit Propylenoxid (PO) und gegebenenfalls zusätzlich Ethylenoxid (EO) erhalten. Bei dieser Umsetzung handelt es sich um eine Alkoxylierungsreaktion von R$^1$-OH mit PO und gegebenenfalls zusätzlich EO. Bei den eingesetzten hydroxyfunktionellen Verbindungen der Formel R$^1$-OH handelt es sich um aliphatische, monofunktionelle Alkohole mit 1 bis 22, vorzugsweise 2 bis 10, insbesondere 3 bis 4 Kohlenstoffatomen handelt. Die hydroxyfunktionellen Verbindung der Formel R$^1$-OH bildet dabei den Starter (die Startverbindung) für die Alkoxylierungsreaktion mit dem Alkylenoxid bzw. den Alkylenoxiden, also PO und gegebenenfalls zusätzlich EO. Die Alkylenoxide lagern sich dabei an den Starter an. Dabei werden die Alkylenoxide unter Ringöffnung und vorzugsweise in Gegenwart eines geeigneten Katalysators in einer Polyadditionsreaktion an die OH-Gruppe addiert. Dies führt zur Bildung der erfindungsgemäßen Verbindungen der Formel (I). Die Alkylenoxide können wahlweise einzeln in reiner Form, abwechselnd hintereinander in beliebiger Dosierreihenfolge, aber auch gleichzeitig gemischt zugefügt werden. Dies bestimmt die Sequenz der Oxyalkylen-Einheiten bzw. Alkylenoxy-Einheiten als Wiederholungseinheiten in der entstehenden Polyetherkette. Durch das Verfahren können Polyetherketten aufgebaut werden, die sich dadurch auszeichnen, dass sie hinsichtlich Strukturaufbau und Molmasse gezielt und reproduzierbar hergestellt werden können. Die Abfolge der Wiederholungseinheiten kann in weiten Grenzen durch die Reihenfolge der Zugabe der Alkylenoxide variabel gestaltet werden. Die Molmasse der Verbindung der Formel (I) kann in weiten Grenzen variiert und gezielt und reproduzierbar über das Molverhältnis bzw. das Massenverhältnis der Alkylenoxide in Bezug auf den Starter $R^1$-OH gesteuert werden. Die Zusammensetzung von Verbindungen der Formel (I) kann also durch die Stöchiometrie eingestellt werden. Beispielsweise ist das Umsetzungsprodukt aus 296 g (4 mol) n-Butanol, 870 g (15 mol) Propylenoxid und 660 g (15 mol) Ethylenoxid eine Verbindung der Formel $R^1O$-[$(C_2H_3R^2)$-O]$_n$-H mit n = 7,5 und $R^1$ = n-Butyl, wobei 50 % der Reste $R^2$ Methylreste sind. Der HLB-Wert dieser Verbindung beträgt 7,2. Die Zusammenhänge zwischen Dosierung und Produktstruktur sind dem Fachmann bekannt.

Für die Alkoxylierungsreaktion, also die Umsetzung der Verbindung $R^1$-OH mit PO und gegebenenfalls zusätzlich EO, können prinzipiell alle dem Fachmann bekannten Alkoxylierungskatalysatoren eingesetzt werden, z.B. basische Katalysatoren wie Alkalihydroxide wie NaOH und KOH, Alkalimetallalkoholate wie Natriummethanolat und Kaliummethanolat, Amine, Guanidine, Amidine, Phosphorverbindungen wie Triphenylphosphin, darüber hinaus saure und Lewis-saure Katalysatoren wie $SnCl_4$, $SnCl_2$, $SnF_2$, $BF_3$ und $BF_3$-Komplexe, sowie Doppelmetallcyanid(DMC)-Katalysatoren, insbesondere solche, die Zinkhexacyanocobaltat(III) enthalten. Vorzugsweise werden als DMC-Katalysatoren die in US 5,158,922, US 20030119663, WO 01/80994 beschriebenen DMC-Katalysatoren eingesetzt. Die Katalysatoren können amorph oder kristallin sein.

Nach Beendigung der Alkoxylierungsreaktion folgt vorzugsweise eine Nachreaktion zur Vervollständigung des Umsatzes. Die Nachreaktion kann z. B. durch Weiterreaktion bei Reaktionsbedingungen (also Beibehaltung z.B. der Temperatur und des Druckes) ohne Zugabe von Edukten durchgeführt werden. Vorzugsweise erfolgt die Nachreaktion unter Durchmischung des Reaktionsgemisches, insbesondere unter Rühren.

Nicht abreagierte Alkylenoxide und eventuell weitere flüchtige Bestandteile können nach der Alkoxylierungsreaktion beispielsweise durch Vakuumdestillation, Wasserdampf- oder Gasstrippen oder andere Methoden der Desodorierung entfernt werden.

Das Reaktionsprodukt wird vorzugsweise mit einer Säure wie Milchsäure, Essigsäure, Propionsäure oder Phosphorsäure neutralisiert und die entstandenen Salze gegebenenfalls durch Filtration entfernt.

Für die Alkoxylierungsreaktion können prinzipiell alle geeigneten Reaktortypen zum Einsatz kommen, die die Reaktion und ihre Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

Die mittlere Molmasse (zahlenmittlere molare Masse Mn bzw. massenmittlere molare Masse Mw) und Polydispersität Mw/Mn der Verbindungen gemäß Formel (I) ist über das molare Verhältnis der Alkylenoxide zum eingesetzten Starter $R^1$-OH in weiten Grenzen einstellbar. Es ist bevorzugt, dass die zahlenmittlere molare Masse der mindestens einen Verbindung der Formel (I) von 300 g/mol bis 4500 g/mol, noch bevorzugter von 400 g/mol bis 3000 g/mol, vorzugsweise von 800 g/mol bis 2000 g/mol insbesondere von 1200 g/mol bis 1500 g/mol beträgt, wobei die zahlenmittlere molare Masse vorzugsweise wie in den Beispielen beschrieben bestimmt wird. Es ist weiterhin bevorzugt, dass die Polydispersität Mw/Mn von 1,0 bis 3,0, vorzugsweise von 1,02 bis 2,0, insbesondere von 1,03 bis 1,6 beträgt, wobei die Polydispersität vorzugsweise wie in den Beispielen beschrieben bestimmt wird. Die Verbindungen gemäß Formel (I) sind je nach Zusammensetzung und Molmasse flüssig, pastös oder fest.

Der Träger kann weitere Bestandteile enthalten, die sich von der mindestens einen Verbindung der Formel (I) unterscheiden. So kann der Träger beispielsweise Entschäumer enthalten, beispielsweise ausgewählt aus der Gruppe der wasserunlöslichen, hydrophoben Verbindungen. Als Entschäumer können beispielsweise Silikonöle, organomodifizierte Siloxane, Mineralöle, Pflanzenöle und modifizierten Pflanzenöle eingesetzt werden. Ferner können als weitere Bestandteile Feststoffe enthalten sein, die die rheologischen Eigenschaften beeinflussen, wie beispielsweise Kieselsäure. Weitere Bestandteile können Antioxidantien sein. Es können zudem Biozide enthalten sein, sofern sie nicht den Wirkstoff beeinträchtigen. Als weitere Bestandteile können zudem wasserabsorbierende Substanzen enthalten sein, um die Lagerung sowie im weiteren Verlauf der Anwendung die Verdünnbarkeit mit Wasser gegebenenfalls noch weiter zu verbessern, die Handhabbarkeit zu erleichtern, zusätzliche sogenannte Humactant-Eigenschaften zu erbringen und/oder die Kristallisation von aktiven Substanzen zu verhindern. Weitere Bestandteile können Dispergieradditive sein, die sogenannte Ankergruppen für Feststoffe aufweisen, wie beispielsweise Sulfonate, Phosphate, aromatische Gruppen, Hydroxylgruppen. Bei den Dispergieradditiven soll es sich vorzugweise nicht um Tenside handeln. Tenside sollen aufgrund der oben diskutierten Gründe als weitere, von der mindestens einen Verbindung der Formel (I) unterschiedliche Bestandteile vorzugsweise nicht im Träger enthalten sein. Unter Tensiden wird im Rahmen der vorliegenden Offenbarung grenzflächenaktive Substanzen verstanden, die, wenn man sie in einer Konzentration von 0,5 Gew.-% bei einer Temperatur von 20°C mit Wasser mischt und eine Stunde bei derselben stehen lässt

a) eine durchsichtige oder durchscheinende Flüssigkeit oder eine stabile Emulsion ohne Abscheidung unlöslicher Stoffe geben und

b) die Oberflächenspannung des Wassers auf 4,5x10$^{-2}$ N/m (45 dyn/cm) oder weniger herabsetzen.

Dies entspricht der Definition von grenzflächenaktiven Substanzen gemäß Zolltarifnummer Position 3402 (Europäische Union). Die Oberflächenspannung kann beispielsweise mit einem Tensiometer, welches die Oberflächenspannung über die Form eines hängenden Tropfens bestimmt (Pendant-Drop-Methode, Tropfenkonturanalyse), ermittelt werden. Als Tensiometer eignet sich beispielsweise das Modell OCA 25 (DataPhysics).

Erfindungsgemäß ist mindestens ein Wirkstoff ausgewählt aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

So kann es bevorzugt sein, dass der mindestens eine Wirkstoff ausschließlich ausgewählt ist aus der Gruppe der mikrobiologischen Wirkstoffe. In diesem Fall ist es also bevorzugt, dass der mindestens eine Wirkstoff nicht ausgewählt ist aus der Gruppe der chemischen Wirkstoffen.

Alternativ kann es bevorzugt sein, dass mindestens ein Wirkstoff ausgewählt ist aus der Gruppe der mikrobiologischen Wirkstoffe, und optional zusätzlich mindestens ein Wirkstoff ausgewählt ist aus der Gruppe der chemischen Wirkstoffen.

Es ist weiterhin bevorzugt, dass der Wirkstoff eine gegen einen bestimmten Krankheitserreger, vorzugsweise Pflanzenkrankheitserreger, gerichtete, vorzugsweise antagonistische und/oder hyperparasitäre Wirkung aufweist.

Der Wirkstoff ist vorzugsweise ein Pflanzenschutzwirkstoff, der bei Nutzpflanzen zur Heilung, Linderung von oder Vorbeugung gegen Krankheiten oder Schädlingsbefall oder als Biostimulanz wirkt.

Es ist bevorzugt, dass der mindestens eine Wirkstoff ausgewählt ist aus der Gruppe bestehend aus Akariziden (AC), Bakteriziden (BA), Fungiziden (FU), Herbiziden (HE), Insektiziden (IN), Nematiziden (NE), Wachstumsregulatoren (PG), Pflanzenstärkungsmittel (PS), Biostimulanzien, Inokulaten und ihren Mischungen; vorzugsweise aus der Gruppe bestehend aus Fungiziden (FU), Herbiziden (HE), Insektiziden (IN), Biostimulanzien und ihren Mischungen; insbesondere aus der Gruppe bestehend aus Fungiziden (FU), Herbiziden (HE), Insektiziden (IN) und ihren Mischungen. Einige dieser Wirkstoffe sind beispielsweise in The Manual of Biocontrol Agents, 2001, The British Crop Protection Council sowie in The Pesticide Manual' 14th edition, 2006, The British Crop Protection Council angegeben. Die vorliegende Erfindung beschränkt sich jedoch nicht nur auf diese dort aufgeführten Wirkstoffe.

Es ist weiterhin bevorzugt, dass zusätzlich mindestens ein Wirkstoff aus der Gruppe der Düngemittel enthalten ist, vorzugsweise ausgewählt aus der Gruppe bestehend aus NPK-Düngern und Mikronährstoffen, wobei die Mikronährstoffe besonders bevorzugt die Elemente K, Mg, Mn, Zn und/oder Fe enthalten.

Besonders bevorzugt ist die Kombination mindestens eines Wirkstoffs ausgewählt aus der Gruppe bestehend aus Düngemitteln und Biostimulanzien mit mindestens einem weiteren Wirkstoff ausgewählt aus der Gruppe bestehend aus Fungiziden (FU), Herbiziden (HE) und Insektiziden (IN).

Vorzugsweise erhöht der Wirkstoff die Resistenz und/oder Stresstoleranz und/oder Nährstoffverfügbarkeit bei Pflanzen.

Im Rahmen der Erfindung ist der mikrobiologische Wirkstoff ausgewählt ist aus der Gruppe bestehend aus Mikroorganismen, Organen von Mikroorganismen und ihren Mischungen. Es ist insbesondere bevorzugt, dass der Mikroorganismus lebt und/oder aktiv ist.

Zu den Mikroorganismen zählen im Sinne der vorliegenden Offenbarung Bakterien, Pilze, Algen, Protozoen und Viren.

Die Mikroorganismen können demnach aus der Gruppe bestehend aus Bakterien, Pilzen, Algen, Protozoen, Viren und ihren Mischungen ausgewählt werden.

Vorzugsweise wird der Mikroorganismus ausgewählt aus der Gruppe bestehend aus Pilzen und Bakterien.

Vorzugsweise wird der Mikroorganismus nicht aus der Gruppe der Viren ausgewählt, insbesondere nicht aus der aus der Gruppe bestehend aus Viren, Algen und Protozoen.

Vorzugsweise wird der (mikrobiologische) Wirkstoff ausgewählt aus der Gruppe bestehend aus Pilzen, Pilzorganen, Bakterien, Bakterienorganen und ihren Mischungen.

Vorzugsweise wird der (mikrobiologische) Wirkstoff ausgewählt aus der Gruppe bestehend aus Pilzen, Pilzorganen und ihren Mischungen.

Es ist weiterhin bevorzugt, dass die Pilzorgane ausgewählt werden aus der Gruppe bestehend aus Sporen, Konidien, Blastosporen, Chlamydosporen, Sklerotien, Hyphensegmente und ihren Mischungen.

Weiter bevorzugt wird der (mikrobiologische) Wirkstoff ausgewählt aus der Gruppe bestehend aus den Pilzen *Ampelomyces quisqualis, Aureobasidium pullulans, Beauveria bassiana, Beauveria brongniartii, Candida oleophila, Clonostachys rosea, Coniothyrium minitans, Gliocladium catenulatum, Gliocladium virens, Isaria fumosorosea, Isaria* spp., *Laetisaria arvalis, Lecanicillium lecanii, Lecanicillium muscarium, Metarhizium anisopliae, Myrothecium verrrucaria, Metarhizium riley (Nomuraea rileyi), Paecilomyces lilacinus, Phlebiopsis gigantea, Phoma macrostoma, Purpureocillium*

*lilacinus, Pythium oligandrum, Talaromyces flavus, Teratospema oligociadum, Trichoderma asperellum, Trichoderma atroviride, Trichoderma gamsii, Trichoderma hamatum, Trichoderma harzianum, Trichoderma koningii, Trichoderma reesei, Trichoderma* spp., *Verticillium biguttatum,* ihren Pilzorganen und Mischungen dieser Pilze und/oder Pilzorgane.

Besonders bevorzugt wird der (mikrobiologische) Wirkstoff ausgewählt aus der Gruppe bestehend aus den Pilzen *Ampelomyces quisqualis, Aureobasidium pullulans, Beauveria bassiana, Candida oleophila, Clonostachys rosea, Coniothyrium minitans, Gliocladium virens, Isaria fumosorosea, Lecanicillium muscarium, Metarhizium anisopliae, Myrothecium verrrucaria, Metarhizium rileyi (Nomuraea rileyi), Purpureocillium lilacinus, Phlebiopsis gigantea, Trichoderma asperellum, Trichoderma atroviride, Trichoderma gamsii, Trichoderma hamatum, Trichoderma harzianum, Trichoderma koningii, Trichoderma reesei,* ihren Pilzorganen und Mischungen dieser Pilze und/oder Pilzorgane.

Der Einsatz folgender Pilze mit gegen bestimmte Pflanzenkrankheitserreger antagonistischer und/oder hyperparasitärer Wirkung ist besonders bevorzugt: *Ampelomyces quisqualis, Beauveria bassiana, Beauveria brongniartii, Clonostachys rosea, Coniothyrium minitans, Gliocladium catenulatum, Isaria* spp., *Laetisaria arvalis, Lecanicillium lecanii, Lecanicillium muscarium, Metarhizium anisopliae, Metarhizium rileyi (Nomuraea rileyi), Paecilomyces lilacinus, Phoma macrostoma, Pythium oligandrum, Talaromyces flavus, Teratosperma oligociadum, Trichoderma* spp. und *Verticillium biguttatum.*

Als Pilze, welche die Nährstoffverfügbarkeit im Boden verbessern bzw. die Widerstandsfähigkeit der Pflanzen gegenüber Stressfaktoren (auch Krankheits- und Schaderreger) erhöhen, werden bevorzugt eingesetzt: *Penicillium bilaii, Trichoderma* spp. sowie alle Arten, die in die Gruppe der *Mykorrhizapilze* eingeordnet werden können.

(Mikrobiologische) Wirkstoffe, ausgewählt aus der Gruppe bestehend aus Pilzen, Pilzorganen und ihren Mischungen, sind besonders für die Verwendung als Pflanzenschutzmittel oder Pflanzenschutzwirkstoff, für die Verwendung als Biostimulanz und/oder für die Behandlung von Saatgut geeignet.

Es ist bevorzugt, dass der (mikrobiologische) Wirkstoff ein Bakterium oder eine Mischung aus verschiedenen Bakterien ist.

Es ist weiterhin bevorzugt, dass das Bakterium oder die Mischung aus verschiedenen Bakterien ausgewählt ist aus der Gruppe bestehend aus *Azospirillum brasilense, Azotobacter chroococcum, Bacillus amyloliquefaciens, Bacillus firmus, Bacillus licheniformis, Bacillus mycoides, Bacillus pumilus, Bacillus subtilis, Bacillus thuringiensis, Bradyrhizobium* spp., *Burkholderia* spp., *Chromobacterium subtsugae, Gluconacetobacter* spp., *Pseudomonas chlororaphis, Pseudomonas fluorescens, Pseudomonas syringae, Rhizobium* spp., *Streptomyces griseoviridis, Streptomyces lydicus* und ihren Mischungen. Diese Zusammensetzungen sind besonders für die Verwendung als Pflanzenschutzmittel, für die Verwendung als Biostimulanz und/oder für die Behandlung von Saatgut geeignet.

Es ist weiterhin bevorzugt, dass das Bakterium oder die Mischung aus verschiedenen Bakterien ausgewählt ist aus der Gruppe bestehend aus *Lactobacillus gasseri, Lactobacillus paracasei, Lactobacillus plantarum, Lactobacillus crispatus, Lactobacillus casei, Lactobacillus animalis, Lactobacillus rhamnosus, Lactobacillus pentosus, Lactobacillus reuteri, Lactococcus lactis, Bacillus pumilus, Bacillus licheniformis, Bacillus coagulans, Bacillus cereus, Bacillus subtilis, Bacillus amyloliquefaciens, Clostridium butyricum, Enterococcus faecium, Streptococcus faecium, Lactobacillus acidophilus, Lactobacillus salivarius, Lactobacillus fermentum, Lactobacillus johnsonii. Lactobacillus helveticus, Streptococcus thermophiles, Pediococcus acidilactici, Bifidobacterium lactis, Bifidobacterium adolescentis, Bifidobacterium lactobacillus, Bifidobacterium animalis, Bifidobacterium longum, Bifidobacterium infantis* und ihren Mischungen. Diese Zusammensetzungen eignen sich besonders für die Verwendung als Probiotikum in Nahrungs- und/oder Futtermitteln.

Es ist weiterhin bevorzugt, dass der (mikrobiologische) Wirkstoff ausgewählt ist aus der Gruppe bestehend aus Laktobazillen, Bifidobakterien, *Enterococcus faecalis, Enterococcus faecium* sowie den Hefepilzen *Saccharomyces boulardii* und *Saccharomyces cerevisiae* und ihren Mischungen. Diese Zusammensetzungen können beispielweise zur Verwendung als probiotisches Arzneimittel geeignet sein. Für einige Krankheiten und Anwendungsgebiete ist die Wirksamkeit von probiotischen Arzneimittel verhältnismäßig gut erforscht. Dazu zählen verschiedene chronischentzündliche Darmerkrankungen, verschiedene Durchfallerkrankungen, chronische Verstopfung, Vorbeugung vor Allergien und Infektionen Frühgeborener, Vorbeugung vor Neurodermitis, Infekte von Hals, Nase, Ohren, Harnwegsinfekte und Zahnkaries.

Es ist ebenfalls bevorzugt, dass der (mikrobiologische) Wirkstoff ein Virus oder eine Mischung verschiedener Viren, vorzugsweise ausgewählt aus der Gruppe der Baculoviren, weiter bevorzugt der Gattungen *Nucleopolyhedrovirus* und *Granulovirus.* In einer bevorzugten Ausführungsform der Zusammensetzung ist als mikrobiologischer Wirkstoff das Virus CpGV *(Cydia pomonella granulovirus)* ausgewählt. Dieses Virus wird beispielsweise zum Schutz vor Raupen des Apfelwicklers im Obstbau eingesetzt. In einer weiteren bevorzugten Ausführungsform der Zusammensetzung ist als mikrobiologischer Wirkstoff der Virus HearNPV *(Helicoverpa armigera Nucleopolyhedrovirus)* ausgewählt. Dieses Virus wirkt spezifisch gegen die Larven des Baumwollkapselwurms und wird beispielsweise zum Schutz von Baumwollpflanzen eingesetzt.

Es ist weiterhin bevorzugt, dass der (mikrobiologische) Wirkstoff eine Mischung der oben genannten Mikroorganismen und/oder ihren Organen ist.

Es ist besonders bevorzugt, dass der mindestens eine (mikrobiologische) Wirkstoff ausgewählt ist aus der Gruppe bestehend aus *Trichoderma harzianum, Bacillus amyloliquefaciens, Beauveria bassiana, Metarhizium rileyi (Nomuraea rileyi), Metarhizium anisopliae, Clonostachys rosea, Aureobasidium pullulans, Coniothyrium minitans* und ihren Organen; wobei die Organe vorzugsweise ausgewählt sind aus der Gruppe bestehend aus Sporen, Konidien, Blastosporen, Chlamydosporen, Sklerotien und Hyphensegmenten.

Es ist weiterhin bevorzugt, dass der mindestens eine (mikrobiologische) Wirkstoff Sporen, vorzugsweise Pilzsporen und/oder Bakteriensporen, insbesondere Sporen von *Trichoderma harzianum* und/oder von *Bacillus amyloliquefaciens* und/oder von *Beauveria bassiana* und/oder von *Metarhizium rileyi (Nomuraea rileyi) und/oder* von *Metarhizium anisopliae* und/oder von *Clonostachys rosea* und/oder *von Aureobasidium pullulans* und/oder *von Coniothyrium minitans* umfasst oder daraus besteht.

Es ist noch mehr bevorzugt, dass der mindestens eine (mikrobiologische) Wirkstoff ausgewählt ist aus der Gruppe bestehend aus *Trichoderma harzianum und Sporen von Trichoderma harzianum.*

Es ist noch mehr bevorzugt, dass der mindestens eine (mikrobiologische) Wirkstoff Sporen von *Trichoderma harzianum* umfasst oder daraus besteht.

Es ist besonders bevorzugt, dass es sich bei dem mindestens einen (mikrobiologischen) Wirkstoff um Sporen von *Trichoderma harzianum* handelt.

Bevorzugt ist auch, dass der mikrobiologische Wirkstoff vegetative Zellen umfasst, insbesondere vegetative Zellen von *Pseudomonas fluorescens* und/oder *Pseudomonas chlororaphis.*

Durch die Einstellung der Wasseraktivität wird die Lebensfähigkeit und/oder Keimfähigkeit des enthaltenen mikrobiellen Wirkstoffs erhöht und somit auch dessen Lagerfähigkeit (Haltbarkeit). Die Wasseraktivität *(activity of water,* $a_w$) ist ein thermodynamischer Parameter. Sie ist ein Maß für die für chemische, biochemische und mikrobielle Reaktionen zur Verfügung stehende Wassermenge von Proben, wie beispielsweise wässrigen Lösungen und Lebensmitteln, und lässt sich auch zur Charakterisierung der Trägerzusammensetzungen und der Wirkstoffzusammensetzung einsetzen. Die Wasseraktivität wird als $a_w$-Wert angegeben und ist definiert als Verhältnis des Wasserdampfdrucks über der Probe (p) zum Wasserdampfdruck reinen Wassers ($p_0$) bei der gleichen Temperatur, $a_w = p / p_0$. Die Wasseraktivität entspricht 1/100 der relativen Gleichgewichtsfeuchtigkeit (RGF). Die relative Gleichgewichtsfeuchtigkeit wird auch als Gleichgewichtsfeuchte *(equilibrium relative humidity,* ERH) bezeichnet. Reines Wasser hat einen $a_w$-Wert von 1 und jeder Zusatz von wasserbindenden Substanzen bewirkt eine Absenkung des $a_w$-Wertes unter 1. Es ist bevorzugt, dass der $a_w$-Wert der Trägerzusammensetzung weniger als 0,4, vorzugsweise weniger als 0,3, insbesondere weniger als 0,25 beträgt. Wasser oder wässrige Lösungen sind aufgrund der hohen Wasseraktivität zur Verwendung als Träger für mikrobiologische Wirkstoffe in der Regel nicht geeignet. Methoden zur Bestimmung des $a_w$-Wertes sind dem Fachmann bekannt. Der $a_w$-Wert wird vorzugsweise wie folgt beschrieben bestimmt:

Zur Bestimmung der Wasseraktivität einer Probe wird die Luftfeuchte nach Erreichen des Feuchtegleichgewichts unmittelbar über einer Probe (Wasserdampf-Partial-Differenzdruck) gemessen. Die Gleichgewichtsfeuchte *(equilibrium relative humidity* ERH) wird in % relative Feuchte gemessen und steht mit dem $a_w$-Wert in folgendem Zusammenhang: $a_w$ = ERH/100. Zur Bestimmung der Wasseraktivität der Zusammensetzungen wurde der *LabMaster-aW neo* der Firma Novasina verwendet.

Die Verbindungen der Formel (I) können gegebenenfalls (beispielsweise synthesebedingt oder durch Aufnahme von Luftfeuchtigkeit bei Lagerung) geringe Mengen an Wasser enthalten. Es kann daher von Vorteil sein, den Wassergehalt und somit die Wasseraktivität einzustellen, insbesondere zu verringern. Dies kann beispielsweise mittels eines thermischen Trennverfahrens geschehen. Thermische Trennverfahren sind unter diesem Begriff dem Fachmann bekannt und umfassen alle Verfahren, die auf der Einstellung eines thermodynamischen Phasengleichgewichtes beruhen. Bevorzugte thermische Trennverfahren sind ausgewählt aus der Gruppe bestehend aus Destillation, Rektifikation, Adsorption, Kristallisation, Extraktion, Absorption, Trocknung und Ausfrieren, besonders bevorzugt sind Methoden der Destillation und Rektifikation. Zur Trocknung können dabei auch Trocknungsmittel wie Molekularsiebe, z.B. Zeolithe, eingesetzt werden.

Es ist bevorzugt, dass der mindestens eine Wirkstoff eine Kombination aus mindestens einem mikrobiologischen Wirkstoff und mindestens einem chemischen Wirkstoff ist.

Bevorzugte chemische Wirkstoffe bzw. Wirkstoffklassen sind Strobilurine, Carboxamide, Triazole, Benzophenone, Morpholine, Neonicotinoide, Sulphonylharnstoffe, Wuchsstoffe, Totalherbizide sowie ihre Kombinationen.

Es ist weiter bevorzugt, dass der chemische Wirkstoffe ausgewählt ist aus der Gruppe bestehend aus Azoxystrobin, Pyraclostrobin Isopyrazam, Epoxyconazole, Difenoconazole, Metrafenon, Fenpropimorph, Thiamethoxam, Rimsulfuron, Dicamba, Glyphosat und ihren Kombinationen.

Die erfindungsgemäße Verwendung der Trägerzusammensetzung führt vorzugsweise zu einer Verbesserung der Handhabbarkeit und der Dosierbarkeit der Wirkstoffzusammensetzung, da die Trägerzusammensetzung bei 25 °C vorzugsweise eine Viskosität von weniger als 1 Pa·s und bei 0 °C vorzugsweise eine Viskosität von weniger als 10 Pa·s aufweist.

Es ist daher bevorzugt, dass die Trägerzusammensetzung bei 25 °C eine Viskosität von weniger als 1 Pa·s und bei 0°C eine Viskosität von weniger als 10 Pa·s aufweist. Vorzugsweise wird die Viskosität wie in den Beispielen beschrieben bestimmt.

Die erfindungsgemäße Verwendung der Trägerzusammensetzung führt vorzugsweise zu einer Steigerung der Lagerstabilität des (mikrobiologischen) Wirkstoffs. Vorzugsweise wird die Lagerstabilität wie in den Beispielen beschrieben bestimmt.

Es ist daher weiterhin bevorzugt, dass der Anteil keimfähiger Sporen bzw. vegetativer Zellen nach Lagerung bei 40 °C nach 28 Tagen mindestens 1 %, weiter bevorzugt mindestens 2 %, insbesondere mindestens 3 % bezogen auf den Startwert beträgt. Vorzugsweise wird Anteil keimfähiger Sporen bzw. vegetativer Zellen wie in den Beispielen beschrieben bestimmt.

Ein weiterer Gegenstand der vorliegenden Erfindung ist daher auch ein Verfahren zur Lagerung mindestens eines Wirkstoffs, wobei der mindestens eine Wirkstoff in einem Träger gelagert wird.

Ein weiterer Gegenstand der Erfindung ist eine Zusammensetzung (in der vorliegenden Offenbarung auch als Wirkstoffzusammensetzung bezeichnet) umfassend:

(a) mindestens eine Verbindung der Formel (I) und
(b) mindestens einen Wirkstoff,

wobei mindestens ein Wirkstoff ausgewählt ist aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

Für den Träger (die Trägerzusammensetzung), die mindestens eine Verbindung der Formel (I) und den mindestens einen Wirkstoff gelten die obigen Ausführungen. Alle Definitionen, Ausführungsformen und Erläuterungen, die für die erfindungsgemäße Verwendung gelten, gelten also *mutatis mutandis* auch für die erfindungsgemäße Zusammensetzung (Wirkstoffzusammensetzung) sowie für das erfindungsgemäße Verfahren und für weitere Gegenstände der vorliegenden Erfindung und umgekehrt.

Es ist bevorzugt, dass die Wirkstoffzusammensetzung aus den Komponenten (a) und (b) (im Wesentlichen) besteht.

Es ist weiterhin bevorzugt, dass der Massenanteil des Trägers bezogen auf die Gesamtmasse der Wirkstoffzusammensetzung von 40 % bis <100 %, vorzugsweise von 70 % bis <99,999 %, insbesondere von 80 % bis 99,99 % beträgt.

Es ist weiterhin bevorzugt, dass der Massenanteil des mindestens einen Wirkstoffs (also aller Wirkstoffe zusammen) bezogen auf die Gesamtmasse der Wirkstoffzusammensetzung von >0 % bis 60 %, vorzugsweise von 0,001 % bis 30 %, insbesondere von 0,01 % bis 20 % beträgt.

Es ist daher bevorzugt, dass der Massenanteil des Trägers bezogen auf die Gesamtmasse der Wirkstoffzusammensetzung von 40 % bis <100 %, vorzugsweise von 70 % bis <99,999 %, insbesondere von 80 % bis 99,99 % beträgt und dass der Massenanteil des mindestens einen Wirkstoffs (also aller Wirkstoffe zusammen) bezogen auf die Gesamtmasse der Wirkstoffzusammensetzung von >0 % bis 60 %, vorzugsweise von 0,001 % bis 30 %, insbesondere von 0,01 % bis 20 % beträgt.

Es ist daher bevorzugt, dass der Massenanteil aller Verbindungen der Formel (I) bezogen auf die Gesamtmasse der Wirkstoffzusammensetzung von 40 % bis <100 %, vorzugsweise von 70 % bis <99,999 %, insbesondere von 80 % bis 99,99 % beträgt und/oder der Massenanteil aller Wirkstoffe bezogen auf die Gesamtmasse der Wirkstoffzusammensetzung von >0 % bis 60 %, vorzugsweise von 0,001 % bis 30 %, insbesondere von 0,01 % bis 20 % beträgt.

Vorzugsweise beträgt der $a_w$-Wert der Wirkstoffzusammensetzung weniger als 0,4, vorzugsweise weniger als 0,3, insbesondere weniger als 0,25. Der $a_w$-Wert wird dabei vorzugsweise wie für den Träger bestimmt.

Es ist weiterhin bevorzugt, dass die Wirkstoffzusammensetzung flüssig ist, beispielsweise also als Öldispersion (OD), Dispersionskonzentrat (DC) oder Suspensionskonzentrat (SC) vorliegt. Dies hat den Vorteil, dass die Zusammensetzung einfach zu handhaben ist. Es ist aber auch möglich, dass die Wirkstoffzusammensetzung fest ist, sie also beispielsweise als ein in Wasser dispergierbares Pulver (WP) oder als ein in Wasser dispergierbares Granulat (WG) vorliegt. Es ist aber besonders bevorzugt, dass die Wirkstoffzusammensetzung als Öldispersion (OD) vorliegt.

Die Wirkstoffzusammensetzung ist erhältlich, indem man den Wirkstoff mit dem Träger mischt. Es ist bevorzugt, dass der Wirkstoff im Träger gelöst und/oder suspendiert und/oder dispergiert wird.

Bei Verwendung eines mikrobiologischen Wirkstoffs, wird der Wirkstoff dabei zuvor vorzugsweise auf einem dafür geeigneten Nährboden nach an sich bekannten Methoden, wie zum Beispiel der Submersfermentation oder der Feststofffermentation, kultiviert. Vorzugsweise wird der kultivierte Mikroorganismus durch geeignete Separations-, Trocknungs-, Mahl- und/oder Dispergierverfahren aufbereitet. Dabei werden vorzugsweise im Anschluss an die Kultivierung der Mikroorganismus und/oder seine bevorzugt verwendeten Organe vom Kultursubstrat vorzugsweise separiert. In einer besonders bevorzugten Variante wird das von dem Mikroorganismus bewachsene Kultursubstrat (insbesondere im Falle der Verwendung von festen Kultursubstraten) zuvor getrocknet. In einer anderen Variante kann der Mikroorganismus bzw. seine bevorzugt verwendeten Organe nach seiner Separation vom Kultursubstrat beispielsweise mit Hilfe von Gefrier- oder Sprühtrocknungsmethoden getrocknet werden. Nach der Separation sowie gegebenenfalls Trocknung werden der Mikroorganismus und/oder seine Organe im Träger suspendiert und/oder dispergiert. Es ist weiterhin bevorzugt, dass man den Mikroorganismus, vorzugsweise ausgewählt aus der Gruppe der Pilze, durch Mahl- und/oder Dispergierverfahren aufbereitet. Dabei erfolgt nach der Kultivierung, vor der Separation des Mikroorganismus und/oder seiner bevorzugt verwendeten Organe eine Aufbereitung des bewachsenen Kultursubstrates durch ein geeignetes Dispergierverfahren oder nach der Trocknung durch ein geeignetes Mahlverfahren. Vorzugsweise erfolgt dann anschließend eine Separation/Isolation des Mikroorganismus bzw. seiner bevorzugt verwendeten Organe durch an sich bekannte Verfahren, wie Sieb-, Filtrations-, Windsicht-, Dekantier- und/oder Zentrifugationsverfahren. Vorzugsweise erfolgt die Herstellung der Wirkstoffzusammensetzung durch Einmischen des mindestens einen Mikroorganismus und/oder seiner Organe in den Träger, vorzugsweise in einem Mischkessel unter Verwendung eines Rührers. Dabei erhält man vorzugsweise eine flüssige Wirkstoffzusammensetzung, wie beispielsweise eine Öldispersion (OD), Suspensionskonzentrat (SC) oder eines Dispersionskonzentrats (DC). Durch Auswahl geeigneter Verbindungen der Formel (I) und/oder Verwendung entsprechender Viskositätsregler kann die Viskosität dabei so eingestellt werden, dass keine oder zumindest nur eine verminderte Separation der eingemischten Mikroorganismen in der flüssigen Formulierung, vorzugsweise einer OD-, SC- oder DC-Formulierung, zu beobachten ist.

Die Wirkstoffzusammensetzung wird für die Anwendung auf Pflanzen bzw. auf dem oder im Boden vorzugsweise im Sprühtank mit Wasser zu einer Spritzbrühe verdünnt. Bevorzugt beträgt der Massenanteil des Wassers bezogen auf die Gesamtmasse der Spritzbrühe 80 % bis 99,99 %, vorzugsweise 90 % bis 99,9 %, insbesondere 95 % bis 99 %. Der Massenanteil kann aber auch darüber oder darunter liegen, je nach Aufwandmenge des mindestens einen Wirkstoffs. Es ist bevorzugt, die Spritzbrühe mit maximal 1000 Litern, vorzugsweise 50 Litern bis 600 Litern, insbesondere mit 100 Litern bis 400 Litern Wasser pro Hektar zu versprühen, was sich nach der Aufwandmenge mindestens einen Wirkstoffs und nach Art und Anzahl der Pflanzen richtet.

Ein weiterer Gegenstand der vorliegenden Erfindung ist die Verwendung der erfindungsgemäßen Wirkstoffzusammensetzung für die Behandlung von Pflanzen und/oder von Saatgut und/oder von Böden.

Ein weiterer Gegenstand der vorliegenden Erfindung ist entsprechend auch ein Verfahren zur Behandlung von Pflanzen und/oder Saatgut und/oder Böden mit der erfindungsgemäßen Wirkstoffzusammensetzung und/oder unter Verwendung der erfindungsgemäßen Wirkstoffzusammensetzung.

Vorzugsweise wird die erfindungsgemäße Wirkstoffzusammensetzung als Pflanzenschutzmittel, Pflanzenstärkungsmittel oder Bodenverbesserungsmittel eingesetzt, besonders bevorzugt wird die erfindungsgemäße Wirkstoffzusammensetzung für den Pflanzenschutz eingesetzt. Es ist also bevorzugt, dass die erfindungsgemäße Wirkstoffzusammensetzung ein Pflanzenschutzmittel ist.

Besonders bevorzugt wird die erfindungsgemäße Wirkstoffzusammensetzung als biologisches Pflanzenschutzmittel, biologisches Pflanzenstärkungsmittel oder biologisches Bodenverbesserungsmittel eingesetzt, besonders bevorzugt wird diese erfindungsgemäße Wirkstoffzusammensetzung für den biologischen Pflanzenschutz eingesetzt.

Bei der Verwendung für den Pflanzenschutz und/oder für die Behandlung von Saatgut wird die Wirkstoffzusammensetzung vorzugsweise in den Boden eingemischt oder eingewässert oder auf/an der Pflanze oder auf/an dem Saatgut appliziert. Dabei wird die Wirkstoffzusammensetzung gegebenenfalls je nach beabsichtigtem Anwendungszweck mit Wasser auf die Anwendungskonzentration verdünnt.

Bevorzugt werden die erfindungsgemäßen Wirkstoffzusammensetzungen als Formulierung, vorzugweise als Pflanzenschutzformulierung, für Spritzbrühen verwendet. Bevorzugt beträgt dabei der Massenanteil des Trägers bezogen auf die Gesamtmasse der Spritzbrühe von 0,001 % bis 1 %, weiter bevorzugt von 0,01 % bis 0,5 %.

Bevorzugt wird die Spritzbrühe über ein Bewässerungssystem, ausgewählt aus der Gruppe bestehend aus Mikrobewässerungssystemen, Sprinklersystemen und Drip-Systemen, auf/an die Pflanze gebracht.

Pflanzenschutzformulierungen werden für ihre Anwendung auf Pflanzen oder Pflanzenteile meist vor dem üblichen Aussprühen über Düsen mit Wasser verdünnt und können neben der wirksamen Komponente auch andere Hilfsmittel, wie Emulgatoren, Dispergierhilfsstoffe, Antifrostmittel, Entschäumer, Biozide und oberflächenaktive Substanzen wie Tenside enthalten. Emulgatoren oder oberflächenaktive Substanzen wie Tenside, sind, sofern es sich nicht um Verbindungen der Formel (I) handelt, vorzugsweise nicht enthalten. Aktivstoffe, insbesondere Fungizide, Insektizide und Nährstoffe können auch allein oder in Kombination und versehen mit den oben angegebenen anderen Hilfsmitteln mit verschiedenen Methoden auf Samen (Saatgut) von Pflanzen aufgebracht werden. Solche Methoden werden auch Saatgutbehandlungsmethoden genannt. Die Saatgutbehandlung mit Fungiziden und Insektiziden kann Pflanzen im frühen Stadium des Wachstums vor Krankheiten und Insektenbefall schützen.

Die Pflanzenschutzformulierungen können auch mittels Pflanzen bestäubende Insekten, sogenannte "Bestäuber", wie beispielsweise Hummeln oder Bienen, auf die Pflanzen aufgebracht werden. Dabei wird die Zusammensetzung gegebenenfalls mit Wasser auf die Anwendungskonzentration verdünnt. Vorzugsweise wird die Zusammensetzung aber unverdünnt eingesetzt. Die Verbreitung von chemischen Pflanzenschutzmitteln mittels bestäubenden Insekten ist beispielsweise in WO 2011026983 A1 beschrieben. Auf entsprechende Weise lassen sich auch biologische Pflanzenschutzmittel verbreiten. Dabei ist es vorteilhaft, wenn die Bestäuber nicht durch den Wirkstoff bzw. die Zusammensetzung beeinträchtigt oder geschädigt werden.

Kommen Biozide in den Formulierungen zur Anwendung, so werden sie so ausgewählt, dass sie die ggf. in der erfindungsgemäßen Zusammensetzung enthaltenen Mikroorganismen nicht schädigen. Dies bedeutet, dass die Mikroorganismen in der Formulierung nur wenig bis gar nicht in ihrer Lebensfähigkeit und/oder Keimfähigkeit eingeschränkt werden.

Eine Wirkstoffzusammensetzung enthaltend Konidien von *Paecilomyces lilacinus* als mikrobiologischen Wirkstoff kann für die biologische Bekämpfung von pflanzenparasitären Nematoden eingesetzt werden. Bei Verwendung der Sporen von *Talaromyces flavus* kann das Präparat zur Bekämpfung von *Verticillium dahliae,* einem Krankheitserreger, der an Baumwolle eine wirtschaftlich relevante Welke hervorruft, verwendet werden. Zusammensetzungen, die Sporen von *Metarhizium rileyi (Nomuraea rileyi)* enthalten, können zur Bekämpfung der Raupen verschiedener schädlicher Schmetterlingsarten, wie beispielsweise *Helicoverpa armigera* und *Spodoptera exigua,* eingesetzt werden. Die Anwendung der Zusammensetzung unter Verwendung der Konidien von *Penicillium bilaii* erhöht die Verfügbarkeit von mineralischem Phosphor im Boden.

Bevorzugte landwirtschaftliche Einsatzgebiete der Wirkstoffzusammensetzungen sind der Ackerbau, der Garten- und Zierpflanzenbau, der Weinbau und der Baumwollanbau. Besonders bevorzugt ist der Obst- und Gemüsebau. Bevorzugtes Obst ist Kernobst, Steinobst, Beerenobst und Schalenobst. Bevorzugtes Gemüse ist Wurzelgemüse, Sprossgemüse, Knollengemüse, Zwiebelgemüse, Blattstielgemüse, Blattgemüse, Blattsalate, Samengemüse, Fruchtgemüse.

Im Falle der Verwendung der Wirkstoffzusammensetzung

i) für die Behandlung von Pflanzen und/oder
ii) für die Behandlung von Saatgut und/oder
iii) für die Behandlung von Böden

wird die Wirkstoffzusammensetzung vorzugsweise als Formulierung für Spritzbrühen eingesetzt, wobei der Massenanteil der Trägerzusammensetzung bezogen auf die Gesamtmasse der Spritzbrühe 0,001% bis 1% beträgt.

Ein weiterer Gegenstand der vorliegenden Erfindung ist die nicht-therapeutische Verwendung der Wirkstoffzusammensetzung als probiotisches Nahrungsergänzungsmittel und/oder probiotisches Futtermitteladditiv. Die Wirkstoffzusammensetzungen können als Probiotikum in Nahrungs- und/oder Futtermitteln verwendet werden. Probiotische Nahrungs- und/oder Futtermittel enthalten als mikrobiellen Wirkstoff üblicherweise Bakterien und/oder Pilze. Zu den probiotischen Nahrungsmitteln zählen beispielsweise Joghurtzubereitungen, Kefirzubereitungen, Sauermilchzubereitungen sowie milchsauer vergorenes Gemüse. Der mikrobielle Wirkstoff entfaltet dabei im Darm eine gesundheitsfördernde Wirkung.

Die nicht-therapeutische Verwendung der Wirkstoffzusammensetzung als probiotisches Nahrungsergänzungsmittel und/oder probiotisches Futtermitteladditiv erfolgt unter der Maßgabe, dass der mindestens eine enthaltene Wirkstoff zur Verwendung als probiotisches Nahrungsergänzungsmittel bzw. probiotisches Futtermitteladditiv geeignet ist.

Ein weiterer Gegenstand der vorliegenden Erfindung ist eine erfindungsgemäße Wirkstoffzusammensetzung zur Verwendung als probiotisches Arzneimittel.

Für die Wirkstoffzusammensetzung zur Verwendung als probiotisches Arzneimittel gilt die Maßgabe, dass der mindestens eine enthaltende Wirkstoff zur Verwendung als probiotisches Arzneimittel geeignet ist.

Entsprechend der erfindungsgemäßen Verwendung der Wirkstoffzusammensetzung sind weitere Gegenstände der vorliegenden Erfindung auch Pflanzenschutzmittel, Biostimulanzien, probiotische Nahrungsergänzungsmittel, probiotische Futtermitteladditive und probiotische Arzneimittel enthaltend oder bestehend aus der erfindungsgemäßen Wirkstoffzusammensetzung.

Alle Definitionen, Ausführungsformen und Erläuterungen, die für die erfindungsgemäße Verwendung oder für die erfindungsgemäßen Zusammensetzung (Wirkstoffzusammensetzung) gelten, gelten also *mutatis mutandis* auch für die erfindungsgemäßen Pflanzenschutzmittel, Biostimulanzien, probiotischen Nahrungsergänzungsmittel, probiotischen Futtermitteladditive und probiotischen Arzneimittel.

Die Trägerzusammensetzungen bzw. die Wirkstoffzusammensetzungen haben zahlreiche Vorteile:
Ein Vorteil ist die Verbesserung der Lagerfähigkeit von Mikroorganismen durch Verwendung der Trägerzusammensetzung bzw. eine verbesserte Lagerfähigkeit der Wirkstoffzusammensetzung. Insbesondere kann die Wirkstoffzusammensetzung viele Wochen bei Raumtemperatur gelagert werden. Dies vereinfacht den Transport und die Lagerung. Die Lagerung und der Transport der Zusammensetzung erfolgen dabei vorzugsweise unter Luftabschluss in luftdicht verschlossenen Flaschen, Beuteln, Kanistern oder Fässern. Die erhöhte Lagerfähigkeit führt insbesondere zu einer Erhöhung der biologischen Aktivität.

Des Weiteren zeigt die Wirkstoffzusammensetzung, insbesondere in Form eines Dispersionskonzentrats, eines Suspensionskonzentrats oder einer Öldispersion, eine verbesserte Lebensfähigkeit und/oder Keimfähigkeit gegenüber dem Stand der Technik.

Eine weitere Verbesserung gegenüber dem Stand der Technik ist, dass die Mikroorganismen und/oder ihre Organe in den anwendungsfertigen wässrigen Verdünnungen deutlich länger lebensfähig und/oder keimfähig bleiben als in den wässrigen Verdünnungen basierend auf dem Stand der Technik.

Formulierungen von Pilzsporen können beispielsweise vor der Anwendung in einer Vormischung mit Wasser angesetzt werden, um die Keimung zu beschleunigen und die Infektionszeit zu verringern (vgl. H.D. Burges: Formulation of Microbial Biopesticides, Springer, 1998). Ebenso empfehlen manche Hersteller mikrobieller Produkte (z.B. Remedier® von Isagro, Naturalis® von CBC Europe, FZB24 von ABiTEP GmbH), die Sporen in der Formulierung vor dem Sprühauftrag zu aktivieren. Dazu wird die Formulierung in einem kleineren Volumen Wasser in einem Gefäß verdünnt (Faktor 3 bis 50) und diese 2 bis 24 Stunden vor dem Sprühen stehen gelassen. Da die Mikroorganismen in dieser Phase besonders empfindlich sind, ist es empfehlenswert, in der Formulierung eine biokompatible Trägerzusammensetzung ohne nachteilige Auswirkungen auf den Mikroorganismus zu verwenden. Die erfindungsgemäße Wirkstoffzusammensetzung zeichnet sich nun durch eine höhere Überlebensfähigkeit der enthaltenen Mikroorganismen bei Raumtemperatur bzw. leicht erhöhten Temperaturen aus. Somit ist sie unkompliziert zu lagern und zu transportieren und benötigt keine Kühlung, um zu gewährleisten, dass eine ausreichend hohe Konzentration keim- bzw. lebensfähiger Mikroorganismen den Zielort auf der Pflanze oder im Boden erreicht. In den anwendungsfertigen wässrigen Verdünnungen beeinträchtigen die erfindungsgemäßen Trägerzusammensetzungen bzw. Wirkstoffzusammensetzungen nicht das Auskeimen bzw. das Wachstum der Mikroorganismen am Zielort.

Ein weiter Vorteil ist, dass der Träger die Dispergierung des Wirkstoffs in einer wässrigen Zusammensetzung, wie beispielsweise der Spritzbrühe erleichtert.

Ein weiterer Vorteil ist, dass der Träger selbstemulgierend oder wasserlöslich ist beziehungsweise selbstemulgierend oder wasserlöslich eingestellt werden kann. Der Träger ist also gut mit Wasser verdünnbar beziehungsweise kann verdünnbar eingestellt werden. Die Trägerzusammensetzung sowie die Wirkstoffzusammensetzung lassen sich leicht in Wasser dispergieren oder sogar lösen. Die Verdünnbarkeit, also die Selbstemulgierbarkeit oder Wasserlöslichkeit, wird vorzugsweise wie in den Beispielen beschrieben bestimmt. Selbstemulgierende oder wasserlösliche und somit verdünnbare Träger bzw. Wirkstoffzusammensetzungen lassen sich ohne großen Schereintrag in Wasser dispergieren oder lösen. Selbstemulgierende Träger bilden hierbei spontan Emulsionströpfchen, vorzugsweise mit einer mittleren Größe von weniger als 400 $\mu$m, weiter bevorzugt weniger als 200 $\mu$m, insbesondere weniger als 100 $\mu$m. Die Größe der Emulsionströpfchen kann beispielsweise durch Laserbeugung bestimmt werden beispielsweise durch Verwendung von Laserbeugungssystemen oder durch die computergestützte Bildauswertung von hochaufgelösten, statischen Aufnahmen des Sprühnebels. Die Größe der Emulsionströpfchen wird bevorzugt durch Laserbeugung gemessen, besonders bevorzugt durch Verwendung des MasterSizers 3000 der Firma Malvern. Der Träger lässt sich also gut in Wasser lösen oder dispergieren und bildet in Wasser eine klare Lösung oder eine milchige Emulsion, wenn der Träger und Wasser in einem Massenverhältnis von 100:100 bis 0,0001:100 gemischt werden. Da Effizienzverstärker für Pflanzenschutzmittel in der Regel wasserlöslich sind, um so die Wirksamkeit von Pflanzenschutzmitteln aus wässrigen Spritzbrühen heraus zu verbessern, ist es im Lichte des Stands der Technik überraschend, dass ähnliche Effekte auch mit selbstemulgierenden Zusammensetzungen erzielt werden können. Der selbstemulgierende Effekt lässt sich insbesondere durch gezielte Einstellung der Hydrophobizität/Hydrophilie der Verbindung der Formel (I) erreichen. Im Fall von Tankmix-Formulierungen kommt es so beispielsweise schon während des Tankmix-Vorgangs zu einer ausreichend homogenen Verteilung der Verbindung der Formel (I) in der Spritzbrühe. Dies erleichtert zum einen die Anfertigung von Spritzbrühen. Des Weiteren kommt es durch die gute Einarbeitbarkeit und der damit verbundenen homogenen Verteilung während des Sprühvorgangs nicht zu einer Verstopfung der Sprühdüsen.

Ein weiterer Vorteil ist, dass die Verbindung der Formel (I) auch bei niedriger Temperatur eine ausreichend niedrige Viskosität aufweist. Dies führt zu einer besseren Dosierbarkeit und einfacheren Handhabung des Pflanzenschutzmittels.

Ein weiterer Vorteil ist die biologische Abbaubarkeit von vielen Verbindungen der Formel (I), des Trägers und der Zusammensetzung umfassend den Träger und den (biologischen bzw. mikrobiologischen) Wirkstoff. Die biologische Abbaubarkeit wird dabei vorzugsweise bestimmt nach der OECD 301 F Methode bestimmt. Weiter bevorzugt wird die biologische Abbaubarkeit nach OECD 301 F nach 28 Tagen bei 22 °C bestimmt.

Ein weiterer Vorteil ist, dass die Adhäsion und Retention von Sprays/Spritzbrühen, die die Trägerzusammensetzung bzw. die Wirkstoffzusammensetzung enthalten, auch auf schwer zu benetzenden Pflanzenoberflächen verbessert wird.

Ein weiter Vorteil ist die hervorragende Verträglichkeit von Verbindungen der Formel (I) mit üblichen Adjuvantien und Entschäumern. Geeignete Adjuvantien und Entschäumer sind dem Fachmann bekannt und beispielsweise unter den Handelsnamen BREAK-THRU® (Evonik Industries AG), SURFYNOL® (Evonik Industries AG) und TOMADOL® (Evonik Industries AG) kommerziell erhältlich. Besonders gute Verträglichkeit zeigt sich mit BREAK-THRU® S 301 und BREAK-THRU® S 255.

Noch ein weiter Vorteil ist, dass die Viskosität, die Rheologie und/oder das Sedimentationsverhalten des gelösten Wirkstoffs durch Zugabe von Kieselsäure einfach eingestellt werden kann. Geeignete Kieselsäuren sind dem Fachmann bekannt und beispielsweise unter dem Handelsnamen AEROSIL® (Evonik Industries AG) kommerziell erhältlich,

In den nachfolgend aufgeführten Beispielen wird die vorliegende Erfindung beispielhaft beschrieben. Die Erfindung ist durch die Ansprüche definiert.

## Beispiele

*Messmethoden und Testverfahren*

Polydispersität, massenmittlere molare Masse (Mw) und zahlenmittlere molare Masse (Mn):
Zur Bestimmung der Polydispersität, der massenmittleren molaren Masse (Mw) und der zahlenmittleren molaren Masse (Mn) wurden GPC-Messungen unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Säurezahl:

Die Säurezahlbestimmung wurde nach einem Titrationsverfahren in Anlehnung an die DIN EN ISO 2114 durchgeführt.

Hydroxylzahl (OH-Zahl):

Hydroxylzahlen wurden nach der Methode DGF C-V 17 a (53) der Deutschen Gesellschaft für Fettwissenschaft bestimmt. Dabei wurden die Proben mit Essigsäureanhydrid in Gegenwart von Pyridin acetyliert und der Verbrauch an Essigsäureanhydrid durch Titration mit 0,5 n Kalilauge in Ethanol gegen Phenolphthalein bestimmt.

Viskosität:

Die Viskosität der zu prüfenden Flüssigkeit (Träger ohne Sporen) wurde mit Hilfe eines MCR 302 Rheometer, Anton Paar bestimmt. Als Messgeometrie wurde eine Platte mit 50 mm Durchmesser verwendet. Es wurde bei einer Scherrate von 10 s$^{-1}$ gemessen. Die Messtemperatur wurde durch ein Peltierelement auf 25°C bzw. 0°C geregelt.

Herstellung der Zusammensetzungen mit *Trichoderma harzianum* als Wirkstoff und einem Träger sowie Bestimmung der Lagerstabilität:
Als Wirkstoff wurden Sporen des Pilzes *Trichoderma harzianum* eingesetzt, die in Pulverform von der Firma Rhizo-Mic UG bezogen wurden. Das Pulver enthielt laut Elementaranalyse außer den Sporen ungefähr 75 Gew.-% SiO$_2$. Der Gehalt an keimfähigen Sporen betrug 1,97 x 10$^9$ Sporen/g Pulver. Die Zusammensetzungen enthaltend den Träger und die Sporen von *Trichoderma harzianum* wurden wie folgt hergestellt: 3 g bzw. 6 g des Sporen enthaltenden Pulvers wurden in ein 50 mL Zentrifugenröhrchen (sterile 50 mL Röhrchen von Greiner Bio-One GmbH) eingewogen und mit 27 g bzw. 24 g Träger überschichtet, sodass jeweils 30 g der Zusammensetzung enthaltend den Träger und die Sporen von *Trichoderma harzianum* erhalten werden. Die Mischung wurde für 30 Sekunden auf einem Vortexschüttler *(lab dancer* der Firma ika) gemischt. Nach dem Homogenisieren mit einem Spatel wurden die Zusammensetzungen nach einer Wartezeit von 15 Minuten erneut für 30 Sekunden auf einem Vortexschüttler gemischt. Die so hergestellten Zusammensetzungen wurden vier Wochen bei 40 °C inkubiert. Die Anzahl koloniebildender Einheiten (KBE) wurden unmittelbar nach der Herstellung (Startwert) sowie nach 4 Wochen bestimmt. Die Anzahl kolonie-bildender Einheiten (KBE) ist ein Maß für die Anzahl der Sporen, die vor bzw. nach der Lagerung in der Lage waren, auszukeimen und Kolonien zu bilden. Zur Bestimmung der Anzahl kolonie-bildender Einheiten (KBE) nach dem Plattenverfahren wurden 1,0 g des Probenmaterials mit steriler physiologischer Kochsalzlösung (0,9 Gew.-% NaCl in Wasser) in einer dezimalen Verdünnungsreihe bis zur Stufe 10$^{-8}$ verdünnt. Es wurden die drei Verdünnungsstufen 10$^{-6}$, 10$^{-7}$ und 10$^{-8}$ (jeweils 1,0 mL) auf Fertignährmedium (Compact Dry YM für Hefen und Schimmelpilze oder Compact Dry Total Count von Nissui Pharmaceutical Co., Ltd.) ausplattiert. Die Pilzsporen wurden drei Tage bei 25°C bebrütet. Ausgewertet wurden solche Platten auf denen 10 bis 100 KBE sichtbar waren. Tabelle 3 zeigt den prozentualen Anteil koloniebildender Einheiten (in KBE/g) bezogen auf den Startwert, als Maß für die Überlebensrate bzw. für die Lagerstabilität der Zusammensetzung. Die dargestellten Ergebnisse sind arithmetische Mittelwerte einer Dreifachbestimmung.

Verdünnbarkeit (Selbstemulgierbarkeit/Wasserlöslichkeit):

Ein 400 mL Becherglas wurde mit 200 mL Leitungswasser gefüllt. Von der zu prüfenden Flüssigkeit (Träger ohne Sporen) wurden 1 mL in einer 2.5 mL Kunststoff Pipette aufgezogen und aus ca. zehn Zentimeter oberhalb des Wasserspiegels mit einem kräftigen Druck auf die Pipette ins Wasser gegeben. Nach ca. 10 Sekunden wird das Becherglas aufgenommen und mit der Hand drei Schwenkbewegungen im Uhrzeigersinn durchgeführt, um die weitere Verteilung zu prüfen. Nach dem Schwenken sollte die Mischung homogen weiß (Milch) oder klar sein. Die so hergestellte Mischung wird für 60 Minuten stehen gelassen und nach dieser Zeit erneut hinsichtlich Homogenität (Aufrahmung/Fettaugen) bewertet. Ist die Mischung weiterhin homogen weiß, so ist die Mischung selbstemulgierbar, ist die Mischung weiterhin klar, so ist sie wasserlöslich. Die Bewertung wurde durch drei erfahrene Labormitarbeiter durchgeführt. Die Verdünnbarkeit (Selbstemulgierbarkeit/Wasserlöslichkeit) wurde bei 20°C bis 22°C getestet.

Verwendete Träger:

Kommerziell erhältliche Rohstoffe:

Als kommerziell erhältliche Rohstoffen wurden die Beispiele 1 bis 8 als potenzielle Träger ausgewählt (s. Tabelle 1). Bei den Beispielen 2 bis 8 handelt es sich um lineare, OH-terminierte Polyether.

Tabelle 1: kommerziell erhältlichen Rohstoffe als Träger (PEG: Poly(ethylenglykol), PPG: Poly(propylennglykol), EO: Ethylenoxid bzw. Ethylenoxy, PO: Propylenoxid bzw. Propylenoxy)

| Beispiel | Rohstoff | Hersteller | molare Masse in g/mol | Massenverhältnis EO/PO |
|---|---|---|---|---|
| 1[1] | Glyzerin (reinst, min. 98%, wasserfrei) | Bernd Kraft GmbH | 92 | - |
| 2[1] | PEG 400 (Kollisolv® PEG E 400) | Sigma Aldrich | 320-420 | 100/0 |
| 3[1] | PEG 1000 | Sigma-Aldrich | 950-1050 | 100/0 |
| 4[1] | PEG 2000 (BioUltra) | Sigma-Aldrich | 1900-2200 | 100/0 |
| 5[1] | PO/EO-Copolymer (Pluronic® PE 6400) | BASF | 2920 | 40/60 |
| 6[1] | PO/EO-Copolymer (PPG 2290) | Evonik | 2200 | 10/90 |
| 7[1] | PPG 400 (Lupranol® 1200) | BASF | 400 | 0/100 |
| 8[1] | PPG 2000 (Voranol® P 2000 L) | Dow Chemical | 2000 | 0/100 |
| [1] nicht erfindungsgemäß | | | | |

Synthesebeispiele:

Zusätzlich wurden als potenzielle Träger die folgenden Polyether hergestellt (Beispiele 9 bis 18):

Synthese der Beispiele 9 bis 14 und 16 bis 18:

In einem 3 Liter Autoklaven wurden Allylalkohol bzw. n-Butanol als Startalkohol und Natriummethanolat bzw. Kaliummethanolat als Base unter Stickstoff vorgelegt und unter Rühren auf 80-90 °C erhitzt. Der Reaktor wurde bis auf einen Innendruck von 400 mbar evakuiert, um evtl. vorhandene flüchtige Inhaltsstoffe destillativ zu entfernen. Propylenoxid (PO) und/oder Ethylenoxid (EO) wurden kontinuierlich unter Kühlen und Rühren in 6 h bei 110-120 °C und max. 4,0 bar Reaktorinnendruck (absolut) zudosiert. An die 60-minütige Nachreaktion bei 110-120 °C schloss sich die Entgasung an. Flüchtige Anteile wie restliches Propylenoxid bzw. Ethylenoxid wurden im Vakuum abdestilliert. Der Polyether wurde mit Phosphorsäure neutralisiert. Wasser wurde im Vakuum bei <30 mbar und 100 °C destillativ entfernt. Der niedrigviskose und farblose Polyether wurde auf unter 80 °C abgekühlt und über ein Filter abgelassen. Die eingesetzten Mengen an Startalkohol, Natriummethanolat, Ethylenoxid (EO) und/oder Proplyenoxid (PO) sowie die Charakterisierung der erhaltenen Polyether sind Tabelle 2 zu entnehmen.

Synthese von Beispiel 15:

In einem 3 Liter Autoklaven wurden 80,0 g Butanol und 11,3 g Natriummethanolat als Base unter Stickstoff vorgelegt und unter Rühren auf 80-90 °C erhitzt. Der Reaktor wurde bis auf einen Innendruck von 400 mbar evakuiert, um evtl. vorhandene flüchtige Inhaltsstoffe destillativ zu entfernen. 2210 g Propylenoxid wurden kontinuierlich unter Kühlen und Rühren in 11 h bei 115 °C und max. 4,0 bar Reaktorinnendruck (absolut) zudosiert. An die 60-minütige Nachreaktion bei 110-120 °C schloss sich die Entgasung an. Flüchtige Anteile wie restliches Propylenoxid wurden im Vakuum abdestilliert. Der Polyether wurde mit Phosphorsäure neutralisiert. Wasser wurde im Vakuum bei <30 mbar und 100 °C destillativ entfernt. Der niedrigviskose und farblose Polyether wurde auf unter 80 °C abgekühlt und über ein Filter abgelassen. Das Produkt hatte eine OH-Zahl von 32,2 mg KOH/g. Lt. GPC hat das Produkt eine massengemittelte molare Masse Mw von 1835 g/mol und eine Polydispersität Mw/Mn von 1,10 (s.a. Tabelle 2).

Tabelle 2: Herstellung und Charakterisierung der Polyether der Beispiele 9 bis 18 (EO: Ethylenoxid bzw. Ethylenoxy, PO: Propylenoxid bzw. Propylenoxy):

| Beispiel | Startalkohol | Base | m(EO) in g | m(PO) in g | m(EO) / m(PO) | Anteil der Reste $R^2$ mit $R^2 = CH_3$ in % [3] | Index n [4] | HLB [5] | OH-Zahl in mg KOH/g | Mw in g/mol | Mw/Mn |
|---|---|---|---|---|---|---|---|---|---|---|---|
| 9[1] | 200 g n-Butanol | 6,0 g Natriummethanolat | 2350 | 0 | 100/0 | 0 | 20 | 18,4 | 61,6 | 910 | 1,05 |
| 10[2] | 200 g n-Butanol | 8,7 g Natriummethanolat | 1679 | 719 | 70/30 | 25 | 19 | 12,9 | 61,3 | 914 | 1,08 |
| **11[2]** | 111 g n-Butanol | 6,0 g Natriummethanolat | 883 | 640 | 58/42 | 35 | 21 | 10,8 | 55,8 | 1035 | 1,07 |
| 12[2] | 90 g n-Butanol | 7,2 g Natriummethanolat | 748 | 1033 | 42/58 | 51 | 29 | 8,0 | 40,3 | 1386 | 1,06 |
| 13[2] | 200 g n-Butanol | 5,5 g Natriummethanolat | 0 | 936 | 0/100 | 100 | 6 | 0,0 | 137 | 410 | 1,06 |
| 14[2] | 200 g n-Butanol | 6,5 g Natriummethanolat | 0 | 1840 | 0/100 | 100 | 12 | 0,0 | 79,5 | 705 | 1,07 |
| 15[2] | 80 g n-Butanol | 11,3 g Natriummethanolat | 0 | 2210 | 0/100 | 100 | 35 | 0,0 | 32,2 | 1835 | 1,10 |
| 16[2] | 145 g Allylalkohol | 6,8 g Natriummethanolat | 1665 | 586 | 74/26 | 21 | 19 | 13,9 | 60,2 | 932 | 1,07 |
| 17[2] | 100 g Allylalkohol | 7,8 g Natriummethanolat | 1026 | 1416 | 42/58 | 51 | 28 | 8,1 | 39,4 | 1420 | 1,06 |
| 18[2] | 58 g Allylalkohol | 10,5 g Kaliummethanolat | 1742 | 2405 | 42/58 | 51 | 81 | 8,3 | 14,4 | 4140 | 1,22 |

[1] nicht erfindungsgemäß

[2] erfindungsgemäß

[3] Anteil der Reste $R^2$ mit $R^2 = CH_3$ in der Verbindung gemäß Formel (I) angegeben in % = molarer Anteil von PO bezogen auf die Gesamtmenge von PO und EO = n(PO)/(n(PO) + n(EO)), mit n(PO) = m(PO)/M(PO) und n(EO) = m(EO)/M(EO) sowie M(PO) = 59,08 g/mol und M(EO) = 44,05 g/mol

[4] Index n gemäß Formel (I) = mittlere Kettenlänge = mittlere Anzahl der Wiederholungseinheiten

[5] berechnet nach HLB = $20 \cdot (1 - m_l/m) = 20 \cdot ((m - m_l)/m) = 20 \cdot m_h/m = 20 \cdot$ m(EO)/[m(Startalkohol)+m(EO)+m(PO)]

Anwendungstechnische Prüfung:

Die Beispiele 1 bis 18 wurde hinsichtlich ihrer Eignung als Träger geprüft. Dabei wurde die Viskosität des Trägers als Maß für die Handhabbarkeit/Dosierbarkeit/Gießbarkeit, der Anteil keimfähiger Sporen nach Lagerung als Maß für die Lagerstabilität einer Zusammensetzung aus Träger und Wirkstoff, sowie die Verdünnbarkeit (Selbstemulgierbarkeit bzw. Wasserlöslichkeit) des Trägers getestet. Eine niedrige Viskosität führt zu einer guten Gießbarkeit und einfachen Dosierbarkeit. Ein hoher Anteil keimfähiger Sporen belegt eine hohe Lagerstabilität. Eine hohe Selbstemulgierbarkeit bzw. Wasserlöslichkeit, also eine gute Verdünnbarkeit, erleichtert die Herstellung der Spritzbrühe. Die Ergebnisse für die Beispiele 1 bis 18 sind in Tabelle 3 zusammengefasst.

Tabelle 3: Ergebnisse der anwendungstechnischen Prüfung der Beispiele 1 bis 18.

| Beispiel | Viskosität bei 25 °C in Pa·s | Viskosität bei 0 °C in Pa·s | Anteil keimfähiger Sporen nach Lagerung bei 40 °C [6] | Verdünnbarkeit |
|---|---|---|---|---|
| 1[1] | 0,862 | 21,148 | 0,017 [7] | wegen Viskosität eher schlecht verteilbar, nach Rühren klar |
| 2[1] | 0,089 | 450 | 0,222 [8] | klar wasserlöslich |
| 3[1] | fest | fest | - | - |
| 4[1] | fest | fest | - | - |
| 5[1] | 0,556 | 367 | 0,135 [7] | mäßig gut verteilbar, nach Rühren klar |
| 6[1] | 0,359 | 1,958 | 0,052 [8] | mäßig gut verteilbar, nach Rühren klar (oberhalb von 23°C trüb) |
| 7[1] | 0,073 | 0,441 | 0,073 [8] | klar wasserlöslich |
| 8[1] | 0,332 | 11,875 | 0,084 [8] | mäßig gut verteilbar, nach Rühren klar |
| 9[1] | fest | fest | - | |
| 10[2] | 0,084 | 0,466 | 7,6 [7] / 7,7[8] | klar wasserlöslich |
| 11[2] | 0,105 | 0,617 | 5,6 [7] / 3,4 [8] | klar wasserlöslich |
| 12[2] | 0,179 | 1,154 | 4,4 [7] / 6,5 [7] / 4,8 [8] | klar wasserlöslich |
| 13[2] | 0,016 | 0,055 | 6,1 [8] | gut verteilbar, stabile, milchige Emulsion |
| 14[2] | 0,040 | 0,156 | 7,2 [7] | gut verteilbar, stabile, milchige Emulsion |
| 15[2] | 0,201 | 1,46 | 5,3 [7] | mäßig gut verteilbar, stabile, milchige Emulsion mit wenigen Fettaugen |
| 16[2] | 0,081 | 0,445 | 5,6 [8] | klar wasserlöslich |
| 17[2] | 0,173 | 1,038 | 13,3 [7] | klar wasserlöslich |
| 18[2] | 1,096 | 5,138 | 5,3 [7] | wegen erhöhter Viskosität schlecht verteilbar, nach Rühren klar |
| Sporen ohne Träger | - | - | 0,052 | - |

[1] nicht erfindungsgemäß
[2] erfindungsgemäß
[6] dargestellt als prozentualer Anteil koloniebildender Einheiten von *Trichoderma harzianum* (in KBE/g) bezogen auf den Startwert
[7] Experimente wurden mit 90 Gew.-% Träger und 10 Gew.-% Sporenpulver durchgeführt
[8] Experimente wurden mit 80 Gew.-% Träger und 20 Gew.-% Sporenpulver durchgeführt

Die erfindungsgemäßen Beispiele 10 bis 18 zeigen im Gegensatz zu den nicht erfindungsgemäßen Beispielen 1 bis 9 eine Viskosität von weniger 1 Pa·s bei 25 °C und von weniger als 10 Pa·s bei 0 °C (jeweils gemessen als Reinsubstanz ohne Sporen) und führen bei Verwendung als Träger für Sporen von *Trichoderma harzianum* zu einem prozentualen Anteil koloniebildender Einheiten (in KBE/g) bezogen auf den Startwert bei Lagerung bei 40 °C zu Werten von über 3 %. Die erfindungsgemäßen Träger 10 bis 18 sind sowohl bei 25 °C als auch bei 0 °C gut handhabbar/dosierbar/gießbar und führen im Vergleich zu den nicht erfindungsgemäßen Trägern zu einer mindestens um den Faktor 10 verbesserten Lagerstabilität. Die Lagerstabilität ist im Falle der zweifach OH-terminierten Polyether (s. Beispiele 2 bis 8) im Vergleich zu den einfach OH-terminierten Polyethern (s. Beispiele 10 bis 12, 14 bis 18) stark reduziert. Polyether, die nur Oxyethylen-Einheiten (= Ethylenoxy-Einheiten) und keine Oxypropylen-Einheiten (= Propylenoxy-Einheiten) enthalten, zeigen insbesondere bei niedrigen Temperaturen eine hohe Viskosität oder sind sogar fest (s. Beispiele 2 bis 4 und 9), wohingegen Polyether, die nur Oxypropylen-Einheiten und keine Oxyethylen-Einheiten aufweisen oder aber sowohl Oxyethylen-Einheiten als auch Oxypropylen-Einheiten enthalten, durchwegs eine niedrige Viskosität zeigen. Die Verdünnbarkeit mit Wasser ist durchwegs ausreichend. Polyether mit einer geringen molaren Masse zeigen eine etwas verbesserte Verdünnbarkeit mit Wasser. Dies wird insbesondere beim Vergleich von Beispiel 17 mit Beispiel 18 deutlich, die sich lediglich in ihrer molaren Masse unterscheiden. Weiterhin wurden auch binäre Gemische (Massenverhältnis 1:1) einiger der o.g. Beispiele hinsichtlich ihrer Viskosität und Verdünnbarkeit untersucht. Die Ergebnisse sind in Tabelle 4 zusammengefasst.

Tabelle 4: Ergebnisse der anwendungstechnischen Prüfung von binären Gemischen (Massenverhältnisse 1:1).

| Komponente 1 | Komponente 2 | Viskosität bei 25 °C in Pa·s | Viskosität bei 0 °C in Pa·s | Verdünnbarkeit |
|---|---|---|---|---|
| Beispiel 15 | - | 0,201 | 1,460 | mäßig gut verteilbar stabile, milchige Emulsion mit wenigen Fettaugen |
| Beispiel 15 | Beispiel 12 | 0,170 | 0,744 | gut verteilbar stabile, milchige Emulsion |
| Beispiel 15 | Beispiel 10 | 0,129 | 0,547 | gut verteilbar stabile, milchige Emulsion |
| Beispiel 15 | Beispiel 14 | 0,095 | 0,412 | gut verteilbar stabile, milchige Emulsion |

Die Viskosität und die Selbstemulgierbarkeit des Trägers lässt sich also durch Mischen unterschiedlicher Polyether gezielt einstellen. Die Mischung des Polyethers aus Beispiel 15 mit einem der Polyether aus Beispiel 10, 12 oder 14 zeigt beispielsweise eine geringere Viskosität und eine bessere Selbstemulgierbarkeit als der Polyether aus Beispiel 15 allein.

**Patentansprüche**

1. Verwendung einer Zusammensetzung, umfassend mindestens eine Verbindung der Formel (I),

$$R^1O\text{-}[(C_2H_3R^2)\text{-}O]_n\text{-}H \qquad \text{Formel (I)},$$

wobei

$R^1$ ein einbindiger aliphatischer Rest mit 1 bis 22, vorzugsweise 2 bis 10, insbesondere 3 bis 4 Kohlenstoffatomen ist,

$R^2$ jeweils unabhängig voneinander ein Wasserstoffradikal oder ein Methylrest ist,

n eine Zahl von 1 bis 300, vorzugsweise von 5 bis 100, insbesondere von 10 bis 30 ist,

mit der Maßgabe, dass mindestens ein Rest $R^2$ ein Methylrest ist,

als Träger für mindestens einen Wirkstoff, wobei mindestens ein Wirkstoff ausgewählt ist aus der Gruppe der mikrobiologischen Wirkstoffe, wobei die mikrobiologischen Wirkstoffe ausgewählt sind aus der Gruppe bestehend aus Mikroorganismen, Organen von Mikroorganismen und ihren Mischungen.

2. Verwendung nach Anspruch 1, **dadurch gekennzeichnet, dass** der Rest $R^1$ ein Alkylrest, vorzugsweise ein Rest ausgewählt aus der Gruppe bestehend aus Methyl, Ethyl, n-Propyl, iso-Propyl, n-Butyl, iso-Butyl, sec-Butyl, tert-

Butyl, n-Pentyl (Amyl), 2-Pentyl (sec-Pentyl), 3-Pentyl; 2-Methylbutyl, 3-Methylbutyl (iso-Pentyl oder iso-Amyl), 3-Methylbut-2-yl, 2-Methylbut-2-yl, 2,2-Dimethylpropyl (Neopentyl), Hexyl, Octyl, Decyl, Dodecyl, Myristyl, Stearyl, 2-Ethylhexyl, 2-Propylheptyl, 3,5,5-Trimethylhexyl, Isononyl, Isotridecyl, insbesondere ein *n*-Butylrest ist.

3. Verwendung nach einem der Ansprüche 1 oder 2, **dadurch gekennzeichnet, dass** 10 % bis 100 %, vorzugsweise 20 % bis 80 %, insbesondere 40 % bis 60 % der Reste R$^2$ Methylreste sind.

4. Verwendung nach einem der Ansprüche 1 bis 3, **dadurch gekennzeichnet, dass** die zahlenmittlere molare Masse der mindestens einen Verbindung der Formel (I) von 400 g/mol bis 3000 g/mol, vorzugsweise von 800 g/mol bis 2000 g/mol insbesondere von 1200 g/mol bis 1500 g/mol beträgt.

5. Verwendung nach einem der Ansprüche 1 bis 4, **dadurch gekennzeichnet**, der HLB-Wert der mindestens einen Verbindung der Formel (I) von 0,0 bis 14,0, vorzugsweise von 3,0 bis 10,0, insbesondere von 7,0 bis 9,5 beträgt.

6. Verwendung nach einem der Ansprüche 1 bis 5, **dadurch gekennzeichnet, dass** der mindestens eine Wirkstoff ausgewählt ist aus der Gruppe der Mikroorganismen bestehend aus *Trichoderma harzianum, Bacillus amyloliquefaciens, Beauveria bassiana, Metarhizium rileyi, Metarhizium anisopliae, Clonostachys rosea, Aureobasidium pullulans, Coniothyrium minitans* und ihren Organen, wobei die Mikroorganismen beziehungsweise ihre Organe vorzugsweise ausgewählt sind aus der Gruppe bestehend aus Sporen, Konidien, Blastosporen, Chlamydosporen, Sklerotien und Hyphensegmenten.

7. Verwendung nach einem der Ansprüche 1 bis 6, **dadurch gekennzeichnet, dass** der mindestens eine Wirkstoff Sporen, vorzugsweise Pilzsporen und/oder Bakteriensporen, insbesondere Sporen von *Trichoderma harzianum* und/oder von *Bacillus amyloliquefaciens* und/oder von *Beauveria bassiana* und/oder von *Metarhizium rileyi* und/oder von *Metarhizium anisopliae* und/oder von *Clonostachys rosea* und/oder von *Aureobasidium pullulans* und/oder von *Coniothyrium minitans* umfasst oder daraus besteht.

8. Verwendung nach einem der Ansprüche 1 bis 7, **dadurch gekennzeichnet, dass** der mindestens eine Wirkstoff Sporen von *Trichoderma harzianum* umfasst oder daraus besteht.

9. Verwendung nach einem der Ansprüche 1 bis 8, **dadurch gekennzeichnet, dass** der mindestens eine Wirkstoff ausgewählt ist aus der Gruppe bestehend aus Akariziden (AC), Bakteriziden (BA), Fungiziden (FU), Herbiziden (HE), Insektiziden (IN), Nematiziden (NE), Wachstumsregulatoren (PG), Pflanzenstärkungsmittel (PS), Biostimulanzien, Inokulaten und ihren Mischungen; vorzugsweise aus der Gruppe bestehend aus Fungiziden (FU), Herbiziden (HE), Insektiziden (IN), Biostimulanzien und ihren Mischungen; insbesondere aus der Gruppe bestehend aus Fungiziden (FU), Herbiziden (HE), Insektiziden (IN) und ihren Mischungen.

10. Verwendung nach einem der Ansprüche 1 bis 9, **dadurch gekennzeichnet, dass** der mindestens eine Wirkstoff eine Kombination aus mindestens einem mikrobiologischen Wirkstoff und mindestens einem chemischen Wirkstoff ist.

11. Verwendung nach einem der Ansprüche 1 bis 9, **dadurch gekennzeichnet, dass** der mindestens eine Wirkstoff ausschließlich ausgewählt ist aus der Gruppe der mikrobiologischen Wirkstoffe.

12. Verfahren zur Lagerung mindestens eines Wirkstoffs, **dadurch gekennzeichnet, dass** der mindestens eine Wirkstoff in einem Träger gelagert wird, jeweils gemäß den Vorgaben nach einem der Ansprüche 1 bis 11.

13. Zusammensetzung umfassend:

    (a) mindestens eine Verbindung der Formel (I) und
    (b) mindestens einen Wirkstoff

jeweils gemäß den Vorgaben nach einem der Ansprüche 1 bis 11.

14. Zusammensetzung nach Anspruch 13, **dadurch gekennzeichnet, dass** der Massenanteil aller Verbindungen der Formel (I) bezogen auf die Gesamtmasse der Wirkstoffzusammensetzung von 40 % bis <100 %, vorzugsweise von 70 % bis <99,999 %, insbesondere von 80 % bis 99,99 % beträgt und/oder der Massenanteil aller Wirkstoffe bezogen auf die Gesamtmasse der Wirkstoffzusammensetzung von >0 % bis 60 %, vorzugsweise von 0,001 % bis 30 %, insbesondere von 0,01 % bis 20 % beträgt.

15. Nicht-therapeutische Verwendung der Zusammensetzung nach einem der Ansprüche 13 oder 14

> i) für die Behandlung von Pflanzen und/oder
> ii) für die Behandlung von Saatgut und/oder
> iii) für die Behandlung von Böden und/oder
> iv) als probiotisches Nahrungsergänzungsmittel und/oder probiotisches Futtermitteladditiv.

16. Verfahren zur Behandlung von Pflanzen und/oder Saatgut und/oder Böden unter Verwendung der Zusammensetzung nach einem der Ansprüche 13 oder 14.

17. Zusammensetzung nach einem der Ansprüche 13 oder 14 zur Verwendung als probiotisches Arzneimittel.

18. Pflanzenschutzmittel, Biostimulanz, probiotisches Nahrungsergänzungsmittel, probiotisches Futtermitteladditiv oder probiotisches Arzneimittel enthaltend oder bestehend aus einer Zusammensetzung nach einem der Ansprüche 13 oder 14.

**Claims**

1. Use of a composition comprising at least one compound of the formula (I)

$$R^1O- [ (C_2H_3R^2) -O]_n-H \qquad \text{Formula (I)}$$

where

$R^1$ is a monovalent aliphatic radical having 1 to 22, preferably 2 to 10, especially 3 to 4, carbon atoms,
$R^2$ is in each case independently a hydrogen radical or a methyl radical,
n is a number from 1 to 300, preferably from 5 to 100, especially from 10 to 30, with the proviso that at least one $R^2$ radical is a methyl radical,
as carrier for at least one active ingredient, wherein at least one active ingredient is selected from the group consisting of active microbiological ingredients, wherein the active microbiological ingredients are selected from the group consisting of microorganisms, organs of microorganisms and mixtures thereof.

2. Use according to Claim 1, **characterized in that** the $R^1$ radical is an alkyl radical, preferably a radical selected from the group consisting of methyl, ethyl, n-propyl, isopropyl, n-butyl, isobutyl, sec-butyl, tert-butyl, n-pentyl (amyl), 2-pentyl (sec-pentyl), 3-pentyl; 2-methylbutyl, 3-methylbutyl (isopentyl or isoamyl), 3-methylbut-2-yl, 2-methylbut-2-yl, 2,2-dimethylpropyl (neopentyl), hexyl, octyl, decyl, dodecyl, myristyl, stearyl, 2-ethylhexyl, 2-propylheptyl, 3,5,5-trimethylhexyl, isononyl, isotridecyl, especially an n-butyl radical.

3. Use according to either of Claims 1 and 2, **characterized in that** 10% to 100%, preferably 20% to 80%, especially 40% to 60%, of the $R^2$ radicals are methyl radicals.

4. Use according to any of Claims 1 to 3, **characterized in that** the number-average molar mass of the at least one compound of the formula (I) is from 400 g/mol to 3000 g/mol, preferably from 800 g/mol to 2000 g/mol, especially from 1200 g/mol to 1500 g/mol.

5. Use according to any of Claims 1 to 4, **characterized in that** the HLB value of the at least one compound of the formula (I) is from 0.0 to 14.0, preferably from 3.0 to 10.0, especially from 7.0 to 9.5.

6. Use according to any of Claims 1 to 5, **characterized in that** the at least one active ingredient is selected from the group of the microorganisms consisting of Trichoderma harzianum, Bacillus amyloliquefaciens, Beauveria bassiana, Metarhizium rileyi, Metarhizium anisopliae, Clonostachys rosea, Aureobasidium pullulans, Coniothyrium minitans and organs thereof, where the microorganisms or their organs are preferably selected from the group consisting of spores, conidia, blastospores, chlamydospores, sclerotia and hyphal segments.

7. Use according to any of Claims 1 to 6, **characterized in that** the at least one active ingredient comprises or consists of spores, preferably fungal spores and/or bacterial spores, especially spores of Trichoderma harzianum and/or of Bacillus amyloliquefaciens and/or of Beauveria bassiana and/or of Metarhizium rileyi and/or of Metarhizium anisopliae and/or of Clonostachys rosea and/or of Aureobasidium pullulans and/or of Coniothyrium minitans.

8. Use according to any of Claims 1 to 7, **characterized in that** the at least one active ingredient comprises or consists of spores of Trichoderma harzianum.

9. Use according to any of Claims 1 to 8, **characterized in that** the at least one active ingredient is selected from the group consisting of acaricides (AC), bactericides (BA), fungicides (FU), herbicides (HE), insecticides (IN), nematicides (NE), growth regulators (PG), plant fortifiers (PS), biostimulants, inoculates and mixtures thereof; preferably from the group consisting of fungicides (FU), herbicides (HE), insecticides (IN), biostimulants and mixtures thereof; especially from the group consisting of fungicides (FU), herbicides (HE), insecticides (IN) and mixtures thereof.

10. Use according to any of Claims 1 to 9, **characterized in that** the at least one active ingredient is a combination of at least one active microbiological ingredient and at least one active chemical ingredient.

11. Use according to any of Claims 1 to 9, **characterized in that** the at least one active ingredient is selected exclusively from the group of active microbiological ingredients.

12. Method for storing at least one active ingredient, **characterized in that** the at least one active ingredient is stored in a carrier, in each case according to the provisions according to any of Claims 1 to 11.

13. Composition comprising:

(a) at least one compound of the formula (I) and
(b) at least one active ingredient,

each according to the provisions according to any of Claims 1 to 11.

14. Composition according to Claim 13, **characterized in that** the proportion by mass of all compounds of the formula (I) based on the total mass of the active ingredient composition is from 40% to < 100%, preferably from 70% to < 99.999%, especially from 80% to 99.99%, and/or the proportion by mass of all active ingredients based on the total mass of the active ingredient composition is from > 0% to 60%, preferably from 0.001% to 30%, especially from 0.01% to 20%.

15. Non-therapeutic use of the composition according to either of Claims 13 and 14

i) for the treatment of plants and/or
ii) for the treatment of seed and/or
iii) for the treatment of soils and/or
iv) as probiotic food supplement and/or probiotic animal feed additive.

16. Method of treating plants and/or seed and/or soils using the composition according to either of Claims 13 and 14.

17. Composition according to either of Claims 13 and 14 for use as probiotic medicament.

18. Crop protection product, biostimulant, probiotic food supplement, probiotic animal feed additive or probiotic medicament comprising or consisting of a composition according to either of Claims 13 and 14.

**Revendications**

1. Utilisation d'une composition comprenant au moins un composé de formule (I),

$$R^1O\text{-}[(C_2H_3R^2)\text{-}O]_n\text{-}H \qquad \text{Formule (I),}$$

dans laquelle

$R^1$ représente un radical aliphatique monovalent comprenant 1 à 22, de préférence 2 à 10, en particulier 3 à 4 atomes de carbone,

R$^2$ représente, indépendamment, un radical hydrogène ou un radical méthyle.

n représente un nombre de 1 à 300, de préférence de 5 à 100, en particulier de 10 à 30, sous réserve qu'au moins un radical R$^2$ est un radical méthyle,

comme support pour au moins un principe actif, au moins un principe actif étant choisi dans le groupe des principes actifs microbiologiques, les principes actifs microbiologiques étant choisis dans le groupe constitué par les micro-organismes, les organites de micro-organismes et leurs mélanges.

2. Utilisation selon la revendication 1, **caractérisée en ce que** le radical R$^1$ représente un radical alkyle, de préférence un radical choisi dans le groupe constitué par méthyle, éthyle, n-propyle, iso-propyle, n-butyle, iso-butyle, sec-butyle, tert-butyle, n-pentyle (amyle), 2-pentyle (sec-pentyle), 3-pentyle ; 2-méthylbutyle, 3-méthylbutyle (iso-pentyle ou isoamyle), 3-méthylbut-2-yle, 2-méthylbut-2-yle, 2,2-diméthylpropyle (néopentyle), hexyle, octyle, décyle, dodécyle, myristyle, stéaryle, 2-éthylhexyle, 2-propylheptyle, 3,5,5-triméthylhexyle, isononyle, isotridécyle, en particulier un radical n-butyle.

3. Utilisation selon l'une des revendications 1 ou 2, **caractérisée en ce que** 10% à 100%, de préférence 20% à 80%, en particulier 40% à 60% des radicaux R$^2$ sont des radicaux méthyle.

4. Utilisation selon l'une des revendications 1 à 3, **caractérisée en ce que** la masse molaire moyenne en nombre dudit au moins un composé de formule (I) est de 400 g/mole à 3000 g/mole, de préférence de 800 g/mole à 2000 g/mole, en particulier de 1200 g/mole à 1500 g/mole.

5. Utilisation selon l'une des revendications 1 à 4, **caractérisée en ce que** la valeur BLH dudit au moins un composé de formule (I) est de 0,0 à 14,0, de préférence de 3,0 à 10,0, en particulier de 7,0 à 9,5.

6. Utilisation selon l'une des revendications 1 à 5, **caractérisée en ce que** ledit au moins un principe actif est choisi dans le groupe des micro-organismes constitué par Trichoderma harzianum, Bacillus amyloliquefaciens, Beauveria bassiana, Metarhizium rileyi, Metarhizium anisopliae, Clonostachys rosea, Aureobasidium pullulans, Coniothyrium minitans et leurs organites, les micro-organismes ou, selon le cas, leurs organites étant de préférence choisis dans le groupe constitué par les spores, les conidies, les blastospores, les chlamydospores, les sclérotes et les segments d'hyphes.

7. Utilisation selon l'une des revendications 1 à 6, **caractérisée en ce que** ledit au moins un principe actif comprend ou est constitué par des spores, de préférence des spores de champignons et/ou des spores de bactéries, en particulier des spores de Trichoderma harzianum et/ou de Bacillus amyloliquefaciens et/ou de Beauveria bassiana et/ou de Metarhizium rileyi et/ou de Metarhizium anisopliae et/ou de Clonostachys rosea et/ou de Aureobasidium pullulans et/ou de Coniothyrium minitans.

8. Utilisation selon l'une des revendications 1 à 7, **caractérisée en ce que** ledit au moins un principe actif comprend ou est constitué par des spores de Trichoderma harzianum.

9. Utilisation selon l'une des revendications 1 à 8, **caractérisée en ce que** ledit au moins un principe actif est choisi dans le groupe constitué par les acaricides (AC), les bactéricides (BA), les fongicides (FU), les herbicides (HE), les insecticides (IN), les nématicides (NE), les régulateurs de croissance (PG), les agents de renforcement de plantes (PS), les biostimulants, les inoculats et leurs mélanges ; de préférence dans le groupe constitué par les fongicides (FU), les herbicides (HE), les insecticides (IN), les biostimulants et leurs mélanges ; en particulier dans le groupe constitué par les fongicides (FU), les herbicides (HE), les insecticides (IN) et leurs mélanges.

10. Utilisation selon l'une des revendications 1 à 9, **caractérisée en ce que** ledit au moins un principe actif est une combinaison d'au moins un principe actif microbiologique et d'au moins un principe actif chimique.

11. Utilisation selon l'une des revendications 1 à 9, **caractérisée en ce que** ledit au moins un principe actif est exclusivement choisi dans le groupe des principes actifs microbiologiques.

12. Procédé d'entreposage d'au moins un principe actif, **caractérisé en ce que** ledit au moins un principe actif est entreposé dans un support à chaque fois selon les spécifications selon l'une des revendications 1 à 11.

13. Composition comprenant :

(a) au moins un composé de formule (I) et
(b) au moins un principe actif

à chaque fois selon les spécifications selon l'une des revendications 1 à 11.

14. Composition selon la revendication 13, **caractérisée en ce que** la proportion massique de tous les composés de formule (I) par rapport à la masse totale de la composition de principes actifs représente 40% à <100%, de préférence 70% à <99,999%, en particulier 80% à 99,99% et/ou la proportion massique de tous les principes actifs par rapport à la masse totale de la composition de principes actifs représente >0% à 60%, de préférence 0,001% à 30%, en particulier 0,01% à 20%.

15. Utilisation non thérapeutique de la composition selon l'une des revendications 13 ou 14

i) pour le traitement de plantes et/ou
ii) pour le traitement de semences et/ou
iii) pour le traitement de sols et/ou
iv) en tant que complément alimentaire probiotique et/ou additif probiotique pour aliments pour animaux.

16. Procédé de traitement de plantes et/ou de semences et/ou de sols à l'aide de la composition selon l'une des revendications 13 ou 14.

17. Composition selon l'une des revendications 13 ou 14, destinée à être utilisée comme médicament probiotique.

18. Agent de phytoprotection, biostimulant, complément alimentaire probiotique, additif probiotique pour aliments pour animaux ou médicament probiotique contenant ou constitué par une composition selon l'une des revendications 13 ou 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017210512 A1
- WO 2017116837 A1
- US 5158922 A
- US 20030119663 A
- WO 0180994 A
- WO 01062826 A
- WO 2011026983 A1

**In der Beschreibung aufgeführte Nicht-Patentliteratur**

- The Manual of Biocontrol Agents. The British Crop Protection Council, 2001
- **PAUL et al.** Long Term Preservation of Commercial Important Fungi in Glycerol at 4°C. *International Journal of Biological Chemistry*, 2015, vol. 9 (2), 79-85
- **W. C. GRIFFIN**. Classification of surface active agents by HLB. *J. Soc. Cosmet. Chem.*, 1949, vol. 1, 311-326
- The Pesticide Manual. The British Crop Protection Council, 2006
- **H.D. BURGES**. Formulation of Microbial Biopestici-des. Springer, 1998